# EUROPEAN PATENT SPECIFICATION

(11) **EP 4 475 000 B1**
(45) Date of publication and mention of the grant of the patent: **08.07.2026**
(21) Application number: 24179883.4
(22) Date of filing: 04.06.2024
(51) Int. Cl.: G06F 12/02, G06F 9/50

(54) **METHOD AND DEVICE WITH VIRTUAL MEMORY MANAGEMENT**
VERFAHREN UND VORRICHTUNG MIT VIRTUELLER SPEICHERVERWALTUNG
PROCÉDÉ ET DISPOSITIF AVEC GESTION DE MÉMOIRE VIRTUELLE

(30) Priority: 08.06.2023 CN 202310680298; 21.02.2024 KR 20240025132
(43) Date of publication of application: 11.12.2024
(73) Proprietor: Samsung Electronics Co., Ltd., Suwon-si, Gyeonggi-do 16677 (KR)
(72) Inventor: Xie, Fengtao, Xi'an, Shaanxi Province, 710000 (CN); Liu, Tian, Xi'an, Shaanxi Province, 710000 (CN); Li, Yueyang, Xi'an, Shaanxi Province, 710000 (CN); Xing, Biao, Xi'an, Shaanxi Province, 710000 (CN); Bang, Byungwoo, Suwon-si, Gyeonggi-do 16678 (KR); Lee, Junyeon, Suwon-si, Gyeonggi-do 16678 (KR)
(74) Representative: Grünecker Patent- und Rechtsanwälte PartG mbB

(56) References cited:
- EP-A1- 2 889 782
- US-A1- 2021 241 417
- US-B2- 9 430 400
- SEUNG WON MIN ET AL: "Graph Neural Network Training with Data Tiering", ARXIV.ORG, CORNELL UNIVERSITY LIBRARY, 201 OLIN LIBRARY CORNELL UNIVERSITY ITHACA, NY 14853, 10 November 2021 (2021-11-10), XP091097087

## Description

### BACKGROUND

### 1. Field

The following description relates to a data storage technology field, and more particularly, to a method and device with virtual memory management.

### 2. Description of Related Art

Memory management technology that directly uses physical memories in a multiprocess system may have disadvantages such as an overly complex variable or function, an address conflict, and a memory shortage. Virtual memory management technology that efficiently manages and protects memories has already been developed.

In virtual memory management systems, an address is often allocated to a process virtual address space in the order in which a process is executed. In this case, a virtual address space for an allocated host and a virtual address space of multiple allocated accelerators are interleaved in a virtual address space. When a failure occurs in a system operation, checkpoint/restore (C/R) technology is typically used to restore data of a host and an accelerator to a state before the failure. However, when virtual addresses of different processors are interleaved, C/R technology often fails to restore a checkpoint.

The above information is related art presented to help with the understanding of the disclosure. No inference is to be drawn as to whether any of the above is applicable as a prior art related to the disclosure.
US 2021/241417 A1 refers to compute optimization mechanism for deep neural networks. An apparatus to facilitate compute optimization is disclosed. The apparatus includes a plurality of processing units each comprising a plurality of execution units, EUs, wherein the plurality of EUs comprise a first EU type and a second EU type.
EP 2 889 782 A1 refers to shared virtual memory. A programming model for CPU-GPU platforms is disclosed. In particular, a disclosure is provided of a uniform programming model for both integrated and discrete devices. The model also works uniformly for multiple GPU cards and hybrid GPU systems, discrete and integrated. This allows software vendors to write a single application stack and target it to all the different platforms. Additionally, here is disclosed a shared memory model between the CPU and GPU. Instead of sharing the entire virtual address space, only a part of the virtual address space needs to be shared. This allows implementation in both discrete and integrated settings.
US 9,430,400 B2 refers to migration directives in a unified virtual memory system architecture.
The publication of SEUNG WON MIN ET AL: titled "Graph Neural Network Training with Data Tiering", ARXIV.ORG, CORNELL UNIVERSITY LIBRARY, 201 OLIN LIBRARY CORNELL UNIVERSITY ITHACA, NY 14853, dated 10 November 2021 (2021-11-10), refers to graph neural network training with data tiering.

### SUMMARY

This Summary is provided to introduce a selection of concepts in a simplified form that are further described below in the Detailed Description. This Summary is not intended to identify key features or essential features of the claimed subject matter, nor is it intended to be used as an aid in determining the scope of the claimed subject matter.

The invention is what is claimed in the independent claims. Preferred embodiments are specified in the dependent claims.

In one general aspect, a method of managing a unified virtual memory (UVM) , performed by an electronic device including an accelerator and a host processor, includes: in response to a memory request from the accelerator, allocating to the accelerator, from among virtual address spaces of the UVM, a virtual address of first virtual address subspaces reserved for the accelerator; and in response to a memory request from the host processor, allocating to the host processor, from among the virtual address spaces, a virtual address of second virtual address subspaces that are exclusive of the first virtual address subspaces.

The method may further include: dividing, among the virtual address spaces of the UVM, the first virtual address subspaces and the second virtual address subspaces by reserving the first virtual address subspaces for the accelerator before the memory request from the accelerator and before the memory request from the host processor.

The first virtual address subspaces may have an address space size that is a integer multiple of a unit size of an address space, and the allocating of the virtual address of the first virtual address subspaces may be based on a size of the memory request from the accelerator and based on the unit size.

The dynamically allocating of the virtual address of at least a portion of the first virtual address subspaces may include: in response to the size of the memory request of the accelerator being greater than or equal to the unit size, segmenting, among the first virtual address subspaces, a virtual address space block having the address space size that is the multiple of the unit size capable of covering the requested address space; and allocating a virtual address of the segmented virtual address space block to satisfy the memory request from the accelerator.

The dynamically allocating of the virtual address of at least a portion of the first virtual address subspaces may include allocating, among the first virtual address subspaces, a virtual address of a virtual address space block having remaining address spaces to satisfy the memory request from the accelerator in response to the size of the memory request from the accelerator being less than the unit size.

The allocating of the virtual address of the virtual address space block having the remaining address spaces may include allocating a virtual address of the remaining address spaces to satisfy the memory request from the accelerator in response to a size of the remaining address spaces of the virtual address space block being less than the unit size and being greater than or equal to the size of the requested address space.

The electronic device may include multiple accelerators, including the accelerator, the first virtual address subspaces may include a non-overlapping first virtual address spaces, wherein each of the non-overlapping first virtual address spaces is reserved for a respectively corresponding accelerator among the accelerators, and the allocating of the virtual address of the first virtual address subspaces reserved for the accelerator to the accelerator may include: determining, among the accelerators, a target accelerator associated with the memory request from the accelerator; and allocating a virtual address of first virtual address subspaces reserved for the determined target accelerator to the determined target accelerator.

The allocating of the virtual address of the first virtual address subspaces reserved for the accelerator to the accelerator may include: in response to the memory request from the accelerator, additionally reserving an additional virtual address space for the accelerator in response to a size of remaining virtual address spaces of the first virtual address subspaces being less than a size of a requested address space associated with the memory request from the accelerator; generating a chain corresponding to the accelerator connecting the first virtual address subspaces to the additional virtual address space; and based on the generated chain corresponding to the accelerator, allocating a virtual address of the additional virtual address space to satisfy the memory request from the accelerator.

The method may further include: deallocating the virtual address of the additional virtual address space in response to a memory reclamation request; and removing the additional virtual address space from the generated chain corresponding to the accelerator.

The method may further include: restoring a virtual address allocated to the accelerator in the first virtual address subspaces reserved for the accelerator in response to a checkpoint restoration request; and restoring a virtual address allocated to the host processor in the second virtual address subspaces in response to the checkpoint restoration request.

The electronic device may include multiple accelerators including the accelerator, and the restoring of the virtual address allocated to the accelerator includes restoring a virtual address specifically allocated to a corresponding accelerator in first virtual address subspaces reserved for each accelerator.

The electronic device may be configured with a compute unified device architecture (CUDA) implemented at least in part by the host processor and the accelerator.

A non-transitory computer-readable storage medium may store instructions that, when executed by the host processor and/or the accelerator, cause the host processor and/or the accelerator to perform any of the methods.

In another general aspect, a device for managing a virtual memory includes: a host processor configured to, in response to a memory request from an accelerator, allocate to the accelerator, from among virtual address spaces, a virtual address of first virtual address subspaces reserved for the accelerator; and a host processor allocation device configured to, in response to a memory request from a host processor, allocate to the host processor, from among the virtual address spaces, a virtual address of second virtual address subspaces that are exclusive of the first virtual address subspaces.

The device may further include: a virtual memory reservation device configured to divide, among the virtual address spaces, the first virtual address subspaces and the second virtual address subspaces by reserving the first virtual address spaces for the accelerator before the memory request from the accelerator and before the memory request from the host processor.

The first virtual address subspaces may have an address space size that is a multiple of a unit size of an address space, and the host processor may be further configured to dynamically allocate a virtual address of at least a portion of the first virtual address subspaces to the accelerator, based on a size of a requested address space of the memory request from the accelerator and the unit size.

The device may include multiple accelerators, including the accelerator, the first virtual address subspaces include non-overlapping first virtual address spaces, wherein each of the non-overlapping first virtual address subspaces may be reserved for a respectively corresponding accelerator among the accelerators, and the host processor may be further configured to: determine, from among the accelerators, a target accelerator associated with the memory request from the accelerator; and allocate a virtual address of first virtual address subspaces reserved for the determined target accelerator to the determined target accelerator.

The host processor may be further configured to: in response to the memory request from the accelerator, additionally reserve an additional virtual address space for the accelerator in response to a size of remaining virtual address spaces of the first virtual address subspaces being less than a size of a requested address space associated with the memory request from the accelerator; generate a chain corresponding to the accelerator connecting the first virtual address subspaces to the additional virtual address space; and based on the generated chain corresponding to the accelerator, allocate a virtual address of the additional virtual address space to satisfy the memory request from the accelerator.

The host processor may be further configured to: deallocate the virtual address of the additional virtual address space in response to a memory reclamation request; and remove the additional virtual address space from the generated chain corresponding to the accelerator.

The accelerator allocation device may be configured to restore a virtual address allocated to the accelerator in the first virtual address subspaces reserved for the accelerator in response to a checkpoint restoration request, and the host processor allocation device may be configured to restore a virtual address allocated to the host processor in the second virtual address subspaces in response to the checkpoint restoration request. Other features and aspects will be apparent from the following detailed description, the drawings, and the claims.

### BRIEF DESCRIPTION OF THE DRAWINGS

FIG. 1 illustrates an example of a virtual memory management method, according to one or more embodiments.
FIGS. 2A to 2C illustrate examples of restoring a virtual address space, according to one or more embodiments.
FIG. 3 illustrates an example of a virtual memory management method, according to one or more embodiments.
FIGS. 4A and 4B illustrate examples of a virtual memory management method, according to one or more embodiments.
FIG. 5 illustrates an example of processing a virtual address allocation, according to one or more embodiments.
FIG. 6 illustrates an example of processing a virtual address dynamic allocation, according to one or more embodiments.
FIG. 7 illustrates an example of processing a dynamic expansion of a virtual address space, according to one or more embodiments.
FIG. 8 illustrates an example of the use of a dynamically expanded virtual address space, according to one or more embodiments.
FIG. 9 illustrates an example of processing a memory reclamation, according to one or more embodiments.
FIG. 10 illustrates an example of processing virtual address release, according to one or more embodiments.
FIG. 11 illustrates an example of checkpoint restoration technology according to the related art.
FIG. 12 illustrates an example of checkpoint restoration technology, according to one or more embodiments.
FIG. 13 illustrates an example of a structure of a virtual memory management device, according to one or more embodiments.
FIG. 14 illustrates an example of a system to which a storage device is applied, according to one or more embodiments.

Throughout the drawings and the detailed description, unless otherwise described or provided, the same or like drawing reference numerals will be understood to refer to the same or like elements, features, and structures. The drawings may not be to scale, and the relative size, proportions, and depiction of elements in the drawings may be exaggerated for clarity, illustration, and convenience.

### DETAILED DESCRIPTION

The following detailed description is provided to assist the reader in gaining a comprehensive understanding of the methods, apparatuses, and/or systems described herein. However, various changes, modifications, and equivalents of the methods, apparatuses, and/or systems described herein will be apparent after an understanding of the disclosure of this application. For example, the sequences of operations described herein are merely examples, and are not limited to those set forth herein, but may be changed as will be apparent after an understanding of the disclosure of this application, with the exception of operations necessarily occurring in a certain order. Also, descriptions of features that are known after an understanding of the disclosure of this application may be omitted for increased clarity and conciseness.

The features described herein may be embodied in different forms and are not to be construed as being limited to the examples described herein. Rather, the examples described herein have been provided merely to illustrate some of the many possible ways of implementing the methods, apparatuses, and/or systems described herein that will be apparent after an understanding of the disclosure of this application.

The terminology used herein is for describing various examples only and is not to be used to limit the disclosure. The articles "a," "an," and "the" are intended to include the plural forms as well, unless the context clearly indicates otherwise. As used herein, the term "and/or" includes any one and any combination of any two or more of the associated listed items. As non-limiting examples, terms "comprise" or "comprises," "include" or "includes," and "have" or "has" specify the presence of stated features, numbers, operations, members, elements, and/or combinations thereof, but do not preclude the presence or addition of one or more other features, numbers, operations, members, elements, and/or combinations thereof.

Throughout the specification, when a component or element is described as being "connected to," "coupled to," or "joined to" another component or element, it may be directly "connected to," "coupled to," or "joined to" the other component or element, or there may reasonably be one or more other components or elements intervening therebetween. When a component or element is described as being "directly connected to," "directly coupled to," or "directly joined to" another component or element, there can be no other elements intervening therebetween. Likewise, expressions, for example, "between" and "immediately between" and "adjacent to" and "immediately adjacent to" may also be construed as described in the foregoing.

Although terms such as "first," "second," and "third", or A, B, (a), (b), and the like may be used herein to describe various members, components, regions, layers, or sections, these members, components, regions, layers, or sections are not to be limited by these terms. Each of these terminologies is not used to define an essence, order, or sequence of corresponding members, components, regions, layers, or sections, for example, but used merely to distinguish the corresponding members, components, regions, layers, or sections from other members, components, regions, layers, or sections. Thus, a first member, component, region, layer, or section referred to in the examples described herein may also be referred to as a second member, component, region, layer, or section without departing from the teachings of the examples.

Unless otherwise defined, all terms, including technical and scientific terms, used herein have the same meaning as commonly understood by one of ordinary skill in the art to which this disclosure pertains and based on an understanding of the disclosure of the present application. Terms, such as those defined in commonly used dictionaries, are to be interpreted as having a meaning that is consistent with their meaning in the context of the relevant art and the disclosure of the present application and are not to be interpreted in an idealized or overly formal sense unless expressly so defined herein. The use of the term "may" herein with respect to an example or embodiment, e.g., as to what an example or embodiment may include or implement, means that at least one example or embodiment exists where such a feature is included or implemented, while all examples are not limited thereto.

Hereinafter, a host processor (or host) may be, for example, a central processing unit (CPU), an application processor (AP) for general-purpose computing, or any other type of processor capable of performing a similar role. The host may execute, for example, software (e.g., a program) to control at least one other component (e.g., a hardware or software component) connected to the host. The host may include a host controller and a host memory. The host memory may be used as a buffer to temporarily store data exchanged with a storage device. The storage device may be configured to store data in response to a request from the host.

An accelerator cooperating with the host may be, for example, a graphics processing unit (GPU), a data processing unit (DPU), a tensor processing unit (TPU), a neural processing unit (NPU), or an auxiliary processor that is operatively independent or combined with the host such as other types of processors. The accelerator may include a specific circuit for a high-speed data task such as an artificial intelligence (AI) data task or the like. The accelerator may be implemented as a component that is physically separated from and/ or integrated with a component of the host.

A virtual address space may have a range of virtual memories (e.g., a set of virtual addresses), which may be referred to as an address space, a process address space, a process virtual address space, a memory box (e.g., a Mem Box), or the like herein, and these terms may be used interchangeably.

An address allocation operation may include allocating a virtual address of a virtual memory in response to a memory allocation request and an operation used for address mapping between a virtual address of an allocated virtual memory and a physical address of a physical memory (not necessarily at the same time; the latter may be deferred).

The address mapping operation may involve mapping a virtual address received from the host to a physical address in a memory.

Hereafter, for ease of understanding, the host processor may be described as a CPU or a host, and the accelerator may be described as a GPU, but these are only examples, and the host processor and the accelerator may be any other type of component for performing functions/roles similar to those described above.

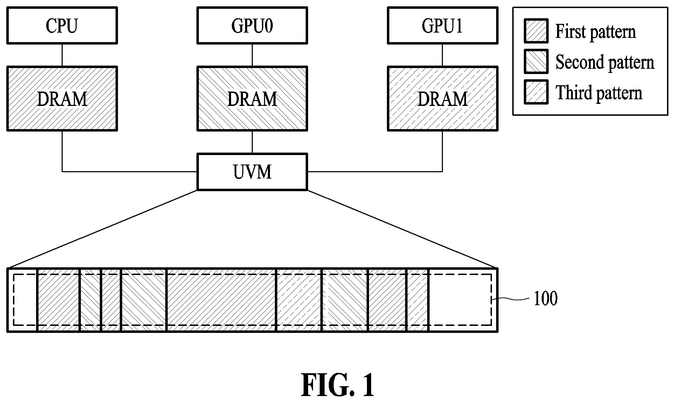

FIG. 1 illustrates an example of a virtual memory management method, according to one or more embodiments.

FIG. 1 illustrates an example of a CPU and two GPUs (e.g., a first GPUO and a second GPU1) included in an electronic device. The electronic device may be, for example, a server device, a supercomputer, high-performance compute (HPC) cluster, or the like. In FIG. 1, dynamic random-access memory (DRAM) components used by different respective processors are illustrated with different respective fill-patterns. In a virtual address space 100, a first pattern represents a virtual address space of the host (e.g., the CPU), a second pattern represents a virtual address space of the first GPUO, and a third pattern represents a virtual address space of the second GPU1. The aforementioned may be managed using a unified virtual memory (UVM). As shown in FIG. 1, when the electronic device operates, use of a virtual address space by processes of the CPU and GPUs may result in interleaving of pieces of DRAM backing the virtual address space. The virtual address space may be occupied sequentially according to the execution order of the processes.

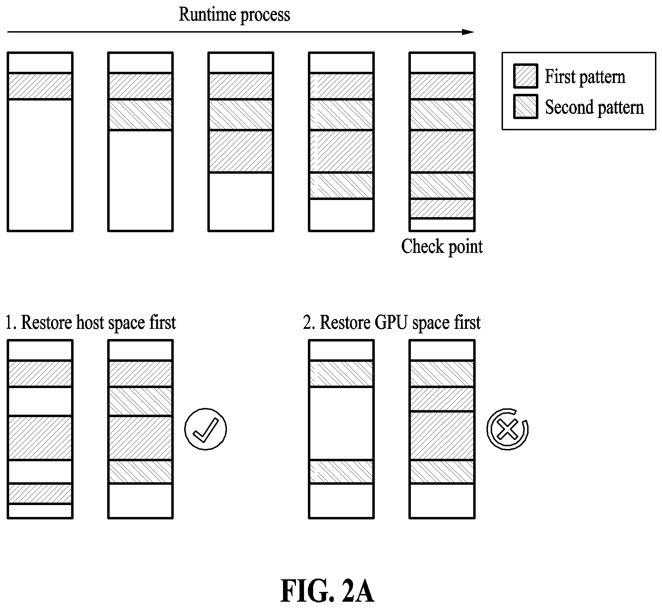

When a failure occurs in a system operation, the electronic device may restore a virtual address space to a pre-failure state using checkpoint/restore (C/R) technology. Commonly used C/R technology may include kernel space C/R technology, application-level C/R technology, and transparent C/R technology. An example of transparent C/R technology is the Distributed MultiThreaded Checkpointing (DMTCP) software. Transparent C/R technology may have the advantages over kernel space and application-level C/R technologies. Transparent C/R technology may be independent from (not part of) an operating system (OS), may not require developers to know a user program, may not require modification of an application program, and may proceed with a checkpoint in a timely manner. However, related C/R technology may often rely on multiple application programming interface (API) interactions to execute and restore a checkpoint, which may lead to more communication overhead and less robustness for a complex large-scale user program. A process of performing a restoration task using transparent C/R technology is described next with reference to FIGS. 2A to 2C.

FIGS. 2A to 2C illustrate examples of restoring a virtual address space, according to one or more embodiments. In each Figure, the top half depicts chronological occupation of a virtual address space up to a checkpoint thereof, and the lower half depicts alternative restoration orders (e.g., CPU -> GPU versus GPU -> CPU) of the checkpoint. In addition, as with FIG. 1, legends in FIGS. 2A to 2C indicate which graphic patterns represent allocations of which processors.

FIG. 2A illustrates an example of restoring a checkpoint of a virtual address space of an electronic device that includes one host processor (e.g., CPU) and one accelerator (e.g., GPU). In FIG. 2A, the first pattern represents a virtual address space occupied by the host processor and a second pattern represents a virtual address space occupied by the accelerator.

In the example of FIG. 2A, when the checkpoint of the virtual address space is restored using C/R technology, as shown in example (1), the electronic device may successfully restore the checkpoint by first restoring the virtual address space of the host processor and then restoring the virtual address space of the accelerator. However, as shown in example (2), the restoration may fail if the electronic device first restores the virtual address space of the accelerator and then restores the virtual address space of the host processor.

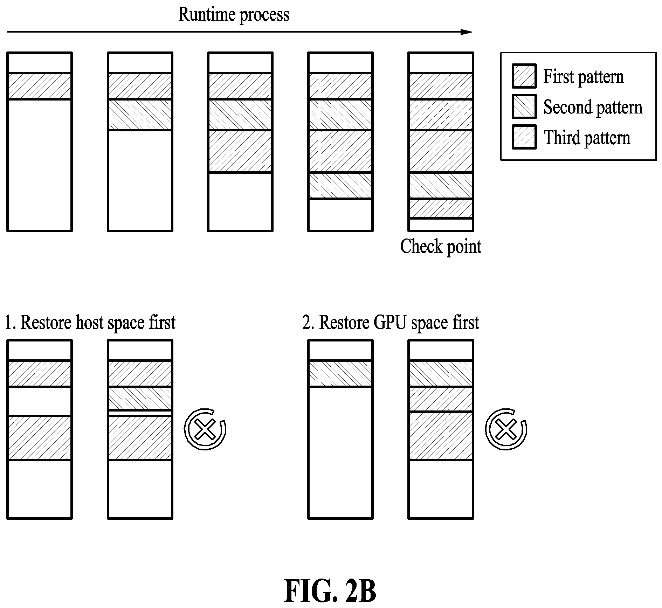

FIG. 2B illustrates another example of restoring a checkpoint of a virtual address space. In this example also, the electronic device includes a host processor and an accelerator, and the host processor or the accelerator releases the virtual address space while the electronic device executes a system (e.g., a program). In FIG. 2B, the first pattern represents a virtual address space of the host processor and the second pattern represents a virtual address space of the accelerator. While the system/program is executing, the virtual address space may be, from top to bottom (i.e., in order), backed by alternating pieces of memory of the host processor and the accelerator. The virtual address space occupied by (backed by) the accelerator (e.g., allocated to the accelerator) may be released (e.g., deallocated) just before the checkpoint is performed. **In** FIG. 2B, the third pattern represents an effect of this release timing, namely, a virtual address space (e.g., released before a checkpoint time point) that is (i) occupied by the accelerator (e.g., the GPU) and then (ii) released just before the checkpoint time point. In this case, neither example (1) nor example (2) correctly restores the virtual memory at the time of the checkpoint.

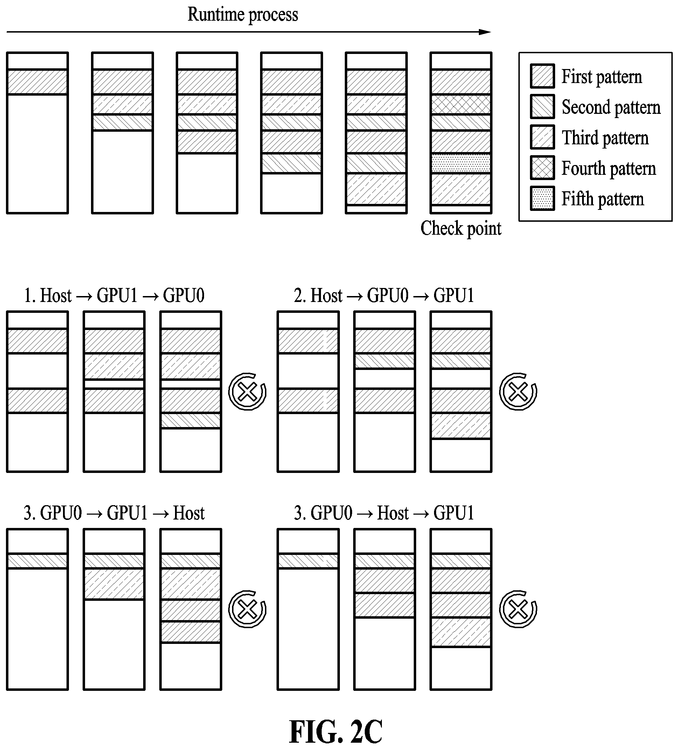

FIG. 2C illustrates an example of restoring a checkpoint of a virtual address space when the electronic device includes one host processor and two GPUs (e.g., GPUO and GPU1)). In FIG. 2C, the first pattern represents a virtual address space backed by the host processor (e.g., the CPU), the second pattern represents a virtual address space of GPUO, and the third pattern represents a virtual address space backed by GPU1. When a system/program is executing, the virtual address space may be occupied alternately by the host processor and the GPUs from top to bottom (in order).

In FIG. 2C, the fourth pattern represents a virtual address space backed by GPU1 and then released at a checkpoint time point, and the fifth pattern represents a virtual address space backed by GPUO and then released at the checkpoint time point. When the virtual address space is restored to the checkpoint state using C/R technology, the electronic device may fail to restore the virtual address space by incorrectly restoring the virtual address space to the virtual address space released at the checkpoint time point independently from (e.g., regardless of) whether there is one accelerator/GPU or whether there are multiple accelerators/GPUs.

As shown in FIG. 2C, even when the restoration of the virtual address space is attempted according to four different restoration orders, the electronic device may fail to restore all four restoration orders. A first restoration order may refer to the order of the host processor (e.g., the CPU), the second accelerator GPU1 (e.g., the second GPU), and the first accelerator GPUO (e.g., the first GPU). A second restoration order may refer to the order of the host processor (e.g., the CPU), the first accelerator GPUO (e.g., the first GPU), and the second accelerator GPU1 (e.g., the second GPU). A third restoration order may refer to the order of the first accelerator GPUO (e.g., the first GPU), the second accelerator GPU1 (e.g., the second GPU), and the host processor (e.g., the CPU). A fourth restoration order may refer to the order of the first accelerator GPUO (e.g., the first GPU), the host processor (e.g., the CPU), and the second accelerator GPU1 (e.g., the second GPU). According to a mechanism for performing a restoration task based on related C/R technology, the electronic device may succeed in the restoration only by sequentially performing the restoration processing on the virtual address space using one host processor and one or more accelerators (e.g., GPUs), and the complexity of virtual address allocation may also increase as the number of accelerators (e.g., the number of GPUs) increases.

In FIG. 2C, two accelerators are illustrated but are not limited thereto. For example, the electronic device may include three or more accelerators (e.g., three or more GPUs). Likewise, as the number of accelerators (e.g., the number of GPUs) increases, it may be more difficult to determine the order for restoring the virtual address space. In a virtual memory management method, C/R technology may have a problem in which the restored virtual address space does not match the virtual address space at the checkpoint time point (e.g., the virtual address space is incorrectly restored), and the electronic device may fail to restore an application or may produce incorrect computation results.

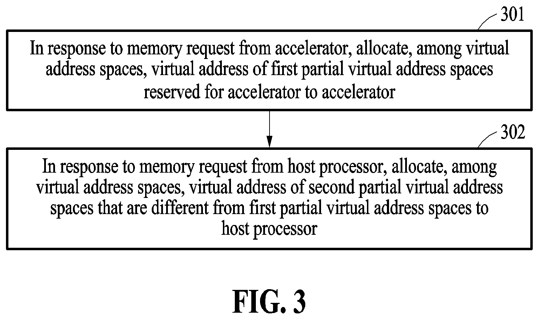

To solve the problem above of the related C/R technology, and others, a method and device for managing a virtual memory are described in detail below with reference to FIGS. 3 to 13.

The virtual memory management method may be performed using a compute unified device architecture (CUDA). Specifically, various examples of the present disclosure may be implemented using CUDA. As described next, using CUDA, communication overhead and the number of API interactions may be reduced.

FIG. 3 illustrates an example of a virtual memory management method, according to one or more embodiments.

In operation 301, in response to a memory request from an accelerator, an electronic device may allocate, to the accelerator, from among virtual address spaces, a virtual address of first virtual address subspaces reserved for the accelerator. The electronic device may allocate a virtual address of a reserved virtual address space to the accelerator in response to the memory request from the accelerator. The first virtual subspaces among the virtual address spaces may refer to a portion reserved for the accelerator.

The electronic device may divide, among the virtual address spaces, the first virtual address subspaces and second virtual address subspaces by reserving the first virtual address subspaces for the accelerator before the memory request from the accelerator and before a memory request from a host processor are made/received. The electronic device may divide a virtual address space into a virtual address space available by the host processor and a virtual address space available by the accelerator by pre-reserving a virtual address space of a virtual memory that may be provided to the accelerator (e.g., may be allocated to the accelerator). In response to receiving the memory request from the accelerator, the electronic device may then allocate a virtual address of at least a portion of the first virtual address subspaces, which is divided into what may be provided to the accelerator, to the accelerator.

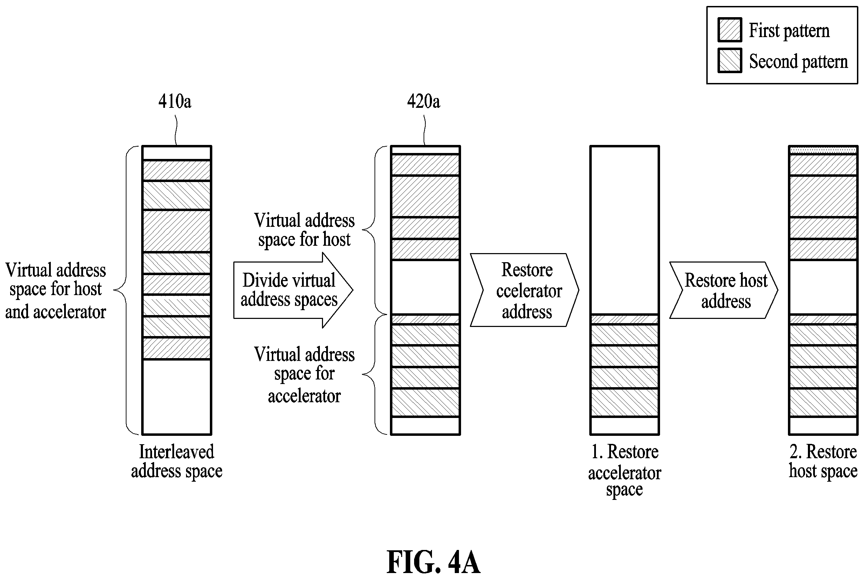

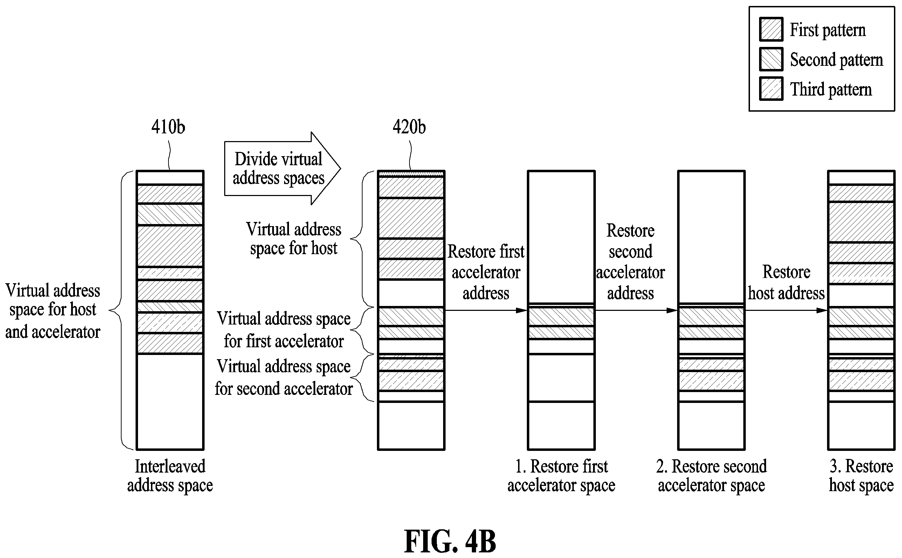

The electronic device may include multiple accelerators. The first virtual address subspaces may include non-overlapping first virtual address subspaces, in which each of the non-overlapping first virtual address subspaces may be reserved for a corresponding accelerator among the accelerators. The electronic device may determine, among the accelerators, a target accelerator designated by (or associated with) the memory request from the accelerator in response to the memory request from the accelerator. The electronic device may allocate a virtual address of first virtual address subspaces reserved for the determined target accelerator to the determined target accelerator. Operation 301 is described below with reference to FIGS. 4A and 4B.

In operation 302, in response to the memory request from the host processor, the electronic device may allocate, among the virtual address spaces, a virtual address of the second virtual address subspaces that are different from (exclusive of) the first virtual address subspaces to the host processor. The electronic device may allocate a virtual address other than a reserved virtual address space to the host processor in response to the memory request from the host processor.

When a memory request designates an accelerator, the electronic device may allocate a virtual address of a reserved virtual address space for the designated accelerator to the designated accelerator, or when a memory request designates a host processor, the electronic device may allocate, in the whole virtual address space, a virtual address of a virtual address space other than a reserved virtual address space to the host processor and may map a physical memory corresponding to the allocated virtual address. A virtual address space of a virtual memory may be divided into virtual address spaces (e.g., the first virtual address subspaces) for the accelerator and virtual address spaces (e.g., the second virtual address subspaces) for the host processor, so the electronic device may allocate a virtual address of the divided virtual address spaces to the host processor or the accelerator corresponding to the memory request in response to the memory request.

The memory request may designate (or be associated with) a host processor or a certain accelerator and may include, for example, a virtual address allocation request from the host processor or the certain accelerator.

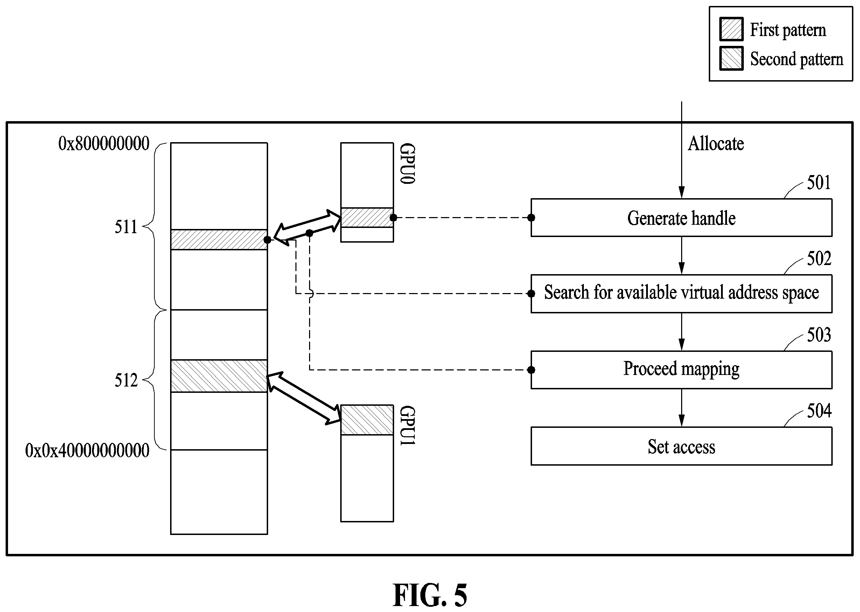

Operations 301 and 302 are described below with reference to FIG. 5.

FIG. 4A illustrates an example of a virtual memory management method when a host includes one accelerator, according to one or more embodiments.

Referring to FIG. 4A, the first pattern represents a virtual address space allocated to the host (or a host processor) and the second pattern represents a virtual address space allocated to the accelerator.

Virtual address space 410a has interleaving of virtual address space portions allocated to the host processor and the accelerator, as may occur with previous virtual memory management methods. That is, the portions of virtual address space allocated to the host and the portions of virtual address space allocated to the accelerator may be interspersed over the whole virtual memory.

In contrast, according to embodiments described herein, virtual address space 420a of FIG. 4A may be divided into a virtual address space for the host and a virtual address space for the accelerator, which may be accomplished by reserving a portion of a virtual address space of a virtual memory.

FIG. 4B illustrates an example of virtual memory management when the host includes a first accelerator and a second accelerator.

Referring to FIG. 4B, the first pattern represents a virtual address space allocated to the host, the second pattern represents a virtual address space allocated to the first accelerator, and the third pattern represents a virtual address space allocated to the second accelerator.

Virtual address space 410b of FIG. 4B has interleaving of virtual address space portions as may occur with previous virtual memory management methods. That is, the virtual address space allocated to the host, the virtual address space allocated to the first accelerator, and the virtual address space allocated to the second accelerator may be freely interleaved with each other over the whole virtual memory.

In contrast, according to embodiments described herein, virtual address space 420b of FIG. 4B may be divided into virtual address spaces for the host and the two accelerators by reserving two portions of virtual address spaces (e.g., two shaded parts in the lower part of FIG. 4B) of a virtual memory. As shown in FIG. 4B, virtual address subspaces, may be reserved for respectively corresponding accelerators.

A virtual memory may be divided by reserving a virtual address space. The electronic device may reserve a virtual address space according to a division rule. The division rule may be preset.

The division rule may include sequentially reserving virtual address spaces based on the order in which accelerators initiate memory requests. That is, the host may reserve a virtual address space for a given accelerator according to the order in which the given accelerator initiates a memory request.

The division rule may include reserving a virtual address space having a preset size.

A reserved virtual address space may be reserved in units of virtual address blocks, each having a predetermined unit (address space) size. Such a virtual address block may also be referred to as a virtual memory block. For example, the virtual address space may be reserved in units of virtual address blocks having the unit size of the address space (e.g., a predetermined address space size).

For example, the host may reserve a virtual address space by a number of virtual address blocks (or virtual memory blocks). That is, the host may reserve, among virtual address spaces, portions each having an address space size that is a multiple of the unit size as first virtual address subspaces. The unit size of the address space may include, but is not limited to, the smallest unit of a virtual memory allocation or a predetermined fixed value (e.g., 2 megabytes (MB)).

The division rule may include reserving a virtual address space based on the size of a requested virtual address space in a memory request (e.g., an initial memory request) from an accelerator.

The reserving of the virtual address space is not limited to the examples described above.

Although it is mainly described that the reserved virtual address spaces have the same size, examples are not limited thereto. For example, virtual address spaces reserved for different accelerators may have different sizes.

FIG. 5 illustrates an example of processing a virtual address allocation, according to one or more embodiments.

FIG. 5 illustrates a first virtual address subspace 511 reserved for a first accelerator GPUO and a second virtual address subspace 512 reserved for a second accelerator GPU1. Portions in different patterns represent different virtual address spaces reserved for different accelerators.

In operation 501, an electronic device (host) may generate a handle of a corresponding physical memory in response to an allocation request from the first accelerator GPUO (e.g., a memory request). Additional explanation of operation 501 follows.

The electronic device may read a configuration setting (e.g., the size of a virtual address space to be reserved) related to a memory management unit (MMU), may complete initialization of an internal address pool by allocating a virtual address space according to the configuration setting, and may register interfaces such as an allocation and deallocation of a device storage in the upper-half portion of a checkpoint restoration framework (see, e.g., CRAC: Checkpoint-Restart Architecture for CUDA with Streams and UVM, as an example of a checkpoint restoration framework). The upper-half portion may correspond to the application (or other user-space code) being checkpointed/restored, as well as supporting linked libraries. For example, an application process may be in the upper-half portion of the checkpoint restoration framework and a code process (e.g., a small CUDA helper program) may be positioned in the lower-half portion of the checkpoint restoration framework.

For example, the electronic device may allocate a physical memory in response to a wrapper interrupting a virtual memory request interface/function (e.g., cudaMalloc). Specifically, in response to the wrapper interrupting the virtual memory request interface/function (e.g., cudaMalloc), the electronic device may call a virtual memory management interface/function by calling an allocation interface/function request (e.g., an allocation interface/function request), may allocate a memory to the first accelerator GPUO, and may obtain a handle of a corresponding physical memory.

Specifically, the wrapper may be used to interrupt a CUDA-related API function that is called during execution of an application, and the electronic device may interrupt a task-related interface using a wrapper mechanism through the checkpoint restoration framework and may log the task-related interface if needed. The electronic device may perform a storage operation by calling a related API function after the wrapper interrupts the CUDA-related API function through a memory-related API function.

For example, the interrupting of the CUDA-related API function may be implemented using LD_PRELOAD, a Linux system environment variable. Specifically, the electronic device may first load a wrapper library during the dynamic library linking stage of loading an application by setting CUDA WRAPPER to LD_PRELOAD, and finally, when the application calls a CUDA memory allocation and/or deallocation-related API function, the CUDA memory allocation and/or deallocation-related API function may be interrupted from the checkpoint restoration framework, and the allocation and/or deallocation may be performed by virtual memory management.

In operation 502, the electronic device may search for an available virtual address space among virtual address spaces (e.g., the partial virtual subspace 511) reserved for the first accelerator GPUO.

For example, the electronic device may update a free list by detecting a virtual address space block that satisfies the requirements of the free list. The free list is a data structure (e.g., a linked list) used to store references to a free virtual address space block and may include one complete virtual address space block in an initial state.

In operation 503, the electronic device may allocate the virtual address space block to the first accelerator GPUO by mapping the handle of the physical memory (e.g., the handle of the physical memory generated in operation 501) to the virtual address space found in operation 502. In FIG. 5, the first pattern represents a virtual address space block allocated in response to a memory request. The electronic device may update an internal resource pool according to the mapping result.

In operation 504, the electronic device may set access based on the mapping result.

For example, a newly allocated virtual address space block may be added to an active list. The active list is a data structure to store a reference/address of a virtual address space block that is in use and may be empty in the initial state. The virtual address space block in use may refer to a virtual address space block that has been allocated to a processor (e.g., a host processor or an accelerator) and has not been released. The virtual address space block in use may include a virtual address space block backed by the processor (e.g., the host processor or the accelerator).

In addition, the electronic device may update a mapping map. The mapping map is a data structure to store a mapping relationship between the virtual address space block and the physical memory and may be empty in the initial state.

A memory allocation process for the second accelerator GPU1 is similar to the memory allocation process for the first accelerator GPUO described above.

As shown in FIGS. 4A and 4B, the electronic device may separately allocate the virtual address spaces for different respective accelerators to the reserved virtual address spaces as a result of the memory requests and may allocate the second virtual address subspaces other than the reserved first virtual address subspace(s) to the host processor.

The electronic device may reserve a certain virtual address space, and in response to a memory request, the electronic device may map a virtual address to a physical address by performing a dynamic allocation process on the certain virtual address space.

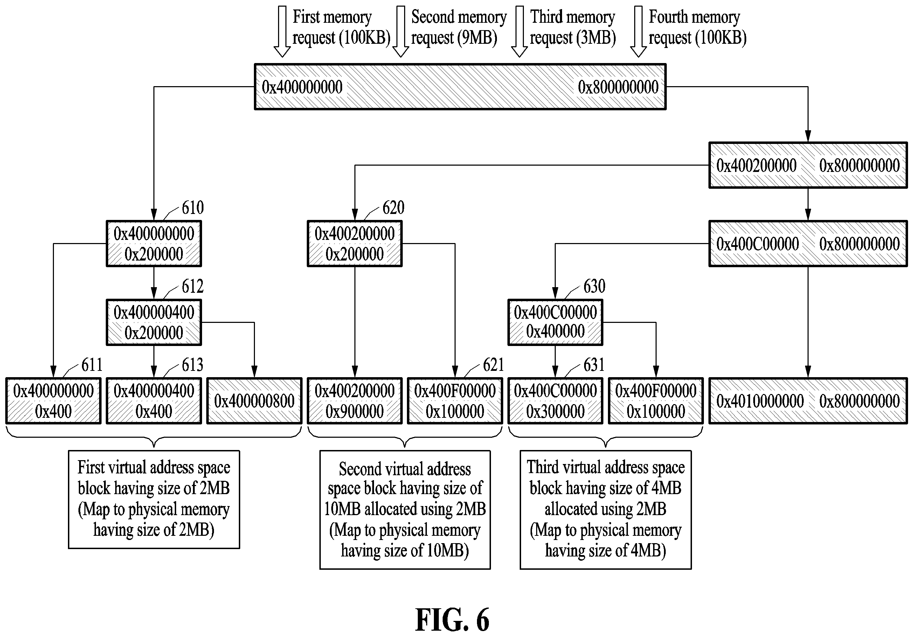

FIG. 6 illustrates an example of processing a virtual address dynamic allocation, according to one or more embodiments.

First virtual address subspaces may each have an address space size that is a multiple of a unit size of an address space, and an electronic device may dynamically allocate a virtual address of at least a portion of the first virtual address subspaces to an accelerator, based on (i) the size of a requested address space in a memory request from the accelerator and (ii) the unit size.

For example, when the size of the requested address space of the memory request from the accelerator is greater than or equal to the unit size, the electronic device may segment, among the first virtual address subspaces, a virtual address space block having the address space size that is the multiple of the unit size capable of covering the requested address space. The electronic device may allocate a virtual address of the segmented virtual address space block responsive to the memory request from the accelerator. That is, when the size of the requested address space is greater than or equal to the size of a virtual memory block (e.g., the unit size of the address space), the electronic device may allocate, among reserved first virtual address subspaces, the segmented virtual address space block to the accelerator (or the memory request from the accelerator) by dynamically segmenting a virtual address space block including a number of unused virtual memory blocks, and when the size of the requested address space is less than the size of the virtual memory block, the electronic device may allocate a virtual address of a virtual address space block having remaining address spaces to the memory request from the accelerator.

The minimum number of virtual address blocks corresponding to a segmented memory application may be connected to each other in terms of a virtual address. For example, virtual memory blocks included in the segmented virtual address space block may be connected to each other in terms of a virtual address.

Physical addresses having a mapping relationship with the minimum number of virtual address blocks corresponding to a segmented memory request may be consecutive. For example, physical addresses mapped to the virtual memory blocks included in the segmented virtual address space block may be consecutive.

For example, when the size of the requested address space of the memory request from the accelerator is less than the unit size, the electronic device may allocate, among the first virtual address subspaces, the virtual address of the virtual address space block having the remaining address spaces for the memory request from the accelerator. When the size of the remaining address spaces of the virtual address space block is less than the unit size and greater than or equal to the size of the requested address space of the memory request from the accelerator, the electronic device may allocate a virtual address of the remaining address spaces in response to the memory request from the accelerator. That is, when a virtual address of a portion of the virtual address space block is already allocated or a mapped physical memory exists and a portion of an unallocated address of the virtual address space block is sufficient to allocate a requested address in the memory request, the electronic device may preferentially allocate the virtual address of the remaining address spaces of the virtual address space block to the memory request.

The electronic device may dynamically allocate the virtual address space according to the size of the requested address space and the unit size of the address space (e.g., a predetermined address space size), as described next with reference to FIG. 6.

For example, in FIG. 6, it may be assumed that a unit size of a virtual address block (or a virtual memory block) is 2MB (i.e., 2,048 kilobytes (KB)), and a reserved virtual address space has a size that is a multiple of 2MB. In FIG. 6, the address space sizes requested from multiple memory requests (e.g., address allocation requests) of one accelerator may respectively be 100KB, 9MB, 3MB, and 100KB.

In response to a first memory request requesting an address space having a size of 100KB, based on the size (e.g., 100KB) of the requested address space being less than the unit size (e.g., 2MB) of the address space, the electronic device may segment, among reserved virtual address spaces (e.g., the first virtual address subspaces), one virtual address block (or the virtual memory block) into a first virtual address space block 610 and may allocate an address space having a size of 100KB (e.g., an address space 611) to the segmented first virtual address space block 610 having a size of 2MB. The electronic device may allocate a virtual address of at least a portion (e.g., the address space 611) of the first virtual address space block 610 to the first memory request. The electronic device may map a virtual address corresponding to the first memory request to a physical memory having a size of 2MB.

In response to a second memory request requesting an address space having a size of 9MB, based on the size (e.g., 9MB) of the requested address space being greater than the unit size (e.g., 2MB) of the address space, the electronic device may segment, among the reserved virtual address spaces, five virtual address blocks (or five virtual memory blocks) into a second virtual address space block 620 having a combined size of 10MB and may allocate an address space having a size of 9MB (e.g., an address space 621) to the segmented second virtual address space block 620 having a size of 10MB. The electronic device may allocate a virtual address of at least a portion (e.g., the address space 621) of the second virtual address space block 620 to the second memory request. The electronic device may map a virtual address corresponding to the second memory request to a physical memory having a size of 10MB.

In response to a third memory request requesting an address space having a size of 3MB, based on the size (e.g., 3MB) of the requested address space being greater than the unit size (e.g., 2MB) of the address space, the electronic device may segment, among the reserved virtual address spaces, two virtual address blocks (or two virtual memory blocks) into a third virtual address space block 630 having a size of 4MB and may allocate an address space having a size of 3MB (e.g., an address space 631) to the segmented third virtual address space block 630 having a size of 4MB. The electronic device may allocate a virtual address of at least a portion (e.g., the address space 631) of the third virtual address space block 630 to the third memory request. The electronic device may map a virtual address corresponding to the third memory request to a physical memory having a size of 4MB.

In response to a fourth memory request requesting an address space having a size of 100MB, based on the size (e.g., 100MB) of the requested address space being less than the unit size (e.g., 2MB) of the address space, and remaining address spaces 621 of the already allocated first virtual address space block 610 greater than the size (e.g., 100KB) of the requested address space, the electronic device may preferentially allocate an address space having a size of 100MB to the first virtual address space block 610. The electronic device may allocate a virtual address of at least a portion (e.g., an address space 613) of the remaining address spaces 612 of the first virtual address space block 610 to the fourth memory request. The electronic device may map a virtual address corresponding to the fourth memory request to a physical memory having a size of 2MB.

As described above with reference to FIG. 6, the electronic device may implement the rational use of the virtual memory and the physical memory and may efficiently manage memories by dynamically allocating and mapping the virtual address space according to the size of the requested virtual address space and the size (the unit size of the address space or the predetermined address space size) of the virtual address block (or the virtual memory block).

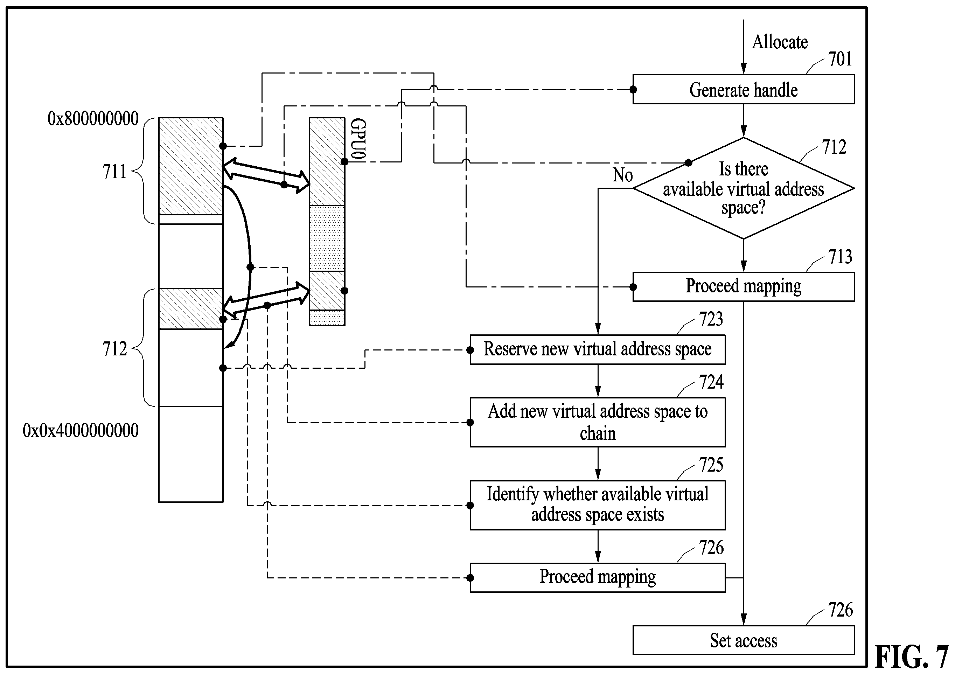

FIG. 7 illustrates an example of processing a dynamic expansion of a virtual address space, according to one or more embodiments.

Due to the difference between accelerators and/or applications, first virtual address subspaces 711 may not be suitable for a memory request from a corresponding accelerator. The electronic device may dynamically expand the first virtual address subspaces 711 when the first virtual address subspaces 711 are not sufficient to allocate a virtual address of an accelerator. The reserving of a virtual address space may involve segmenting and dividing the virtual address space but may further include additionally reserving (e.g., expanding) the virtual address space when the first virtual address subspaces 711 are insufficient.

In response to a memory request from the accelerator, the electronic device may reserve an additional virtual address space 712 for the accelerator when the size of remaining virtual address spaces of the first virtual address subspaces 711 is less than the size of a requested address space of the memory request from the accelerator. The electronic device may generate a chain (that corresponds to the accelerator) connecting the first virtual address subspaces 711 to the additional virtual address space 712. The electronic device may allocate a virtual address of the additional virtual address space 712 in response to the memory request from the accelerator and may do so based on the generated chain corresponding to the accelerator.

The remaining virtual address spaces in the first virtual address subspaces 711 may be virtual address spaces in which a virtual address of the remaining virtual address spaces has not been allocated to the accelerator (or the memory request from the accelerator). When the pre-reserved first virtual address subspaces 711 are insufficient, the electronic device may expand the first virtual address subspaces 711 by additionally reserving the additional virtual address space 712 and may generate the chain connected between the pre-reserved first virtual address subspaces 711 and the additionally reserved additional virtual address space 712. A process of dynamically expanding the first virtual address subspaces 711 is described next with reference to FIG. 7.

Referring to FIG. 7, when the size of an address space (e.g., a virtual address space) requested by the first accelerator GPU0 is greater than the size of the remaining virtual address spaces of the first virtual address subspaces 711 reserved for the first accelerator GPUO, the electronic device may additionally reserve the additional virtual address space 712 for the first accelerator GPUO, may generate the chain between the first virtual address subspaces 711 and the additional virtual address space 712, and may allocate a virtual address of the additionally reserved additional virtual address space 712 to the first accelerator GPUO (or the memory request from the first accelerator GPUO).

Specifically, in operation 701, the electronic device may generate a handle of a physical memory in response to the memory request (e.g., an allocation request) from the accelerator.

In operation 712, the electronic device may determine whether an available virtual address space exists. The electronic device may determine, among the first virtual address subspaces 711 reserved for the accelerator, whether it is possible to allocate the size of a virtual address space to be equal to the size of the requested address space of the memory request from the accelerator.

For example, the electronic device may compare, (e.g., performed by the accelerator), among the first virtual address subspaces 711, the size of the remaining portions (e.g., the remaining virtual address spaces) other than a portion in use (e.g., already allocated) with the size of the requested address space.

For example, when an allocation is successful according to the method described above with reference to FIG. 5, the electronic device may determine that an available virtual address space exists, and when the allocation fails, the electronic device may determine that an available virtual address space does not exist.

In operation 713, when it is determined that an available virtual address space exists, the electronic device may map the handle of the physical memory generated in operation 701 to a virtual memory of the first virtual address subspaces 711. Here, the processing of an address allocation is similar to the processing of the address allocation described above with reference to FIG. 5.

In operation 723, when it is determined that an available virtual address space does not exist, the electronic device may additionally reserve the additional virtual address space 712 (e.g., a Mem Box) for the first accelerator GPUO. For example, when an available virtual address space (e.g., the remaining virtual address spaces) among the first virtual address subspaces 711 is less than the requested virtual address space, the electronic device may determine that an available virtual address space does not exist. The electronic device may search for and additionally reserve a new virtual address space for the first accelerator GPUO.

In response to the memory request from the accelerator, the electronic device may additionally reserve the additional virtual address space 712 for the accelerator when the size of the remaining virtual address spaces of the first virtual address subspaces 711 is less than the size of the requested address space of the memory request. The additional virtual address space 712 among the virtual address spaces may be at least a portion that is both not reserved for the accelerator and for which a virtual address has not been allocated to the processor (e.g., the host processor or another accelerator).

In operation 724, the electronic device may add the additional virtual address space 712 (e.g., a Mem Box) to the chain. The electronic device may generate the chain connecting the first virtual address subspaces 711 related to the first accelerator GPUO to the additional virtual address space 712.

The electronic device may generate the chain connecting the pre-reserved (e.g., reserved before the memory request) first virtual address subspaces 711 to the additionally reserved (e.g., reserved after the memory request) additional virtual address space 712.

In operation 725, the electronic device may identify whether an available virtual address space exists in the additional virtual address space 712.

In operation 726, the electronic device may map the handle of the physical memory generated in operation 701 to a virtual memory of the additional virtual address space 712. Here, the processing of an address allocation is similar to the processing of the address allocation described above with reference to FIG. 5. The electronic device may allocate the virtual address of the additional virtual address space 712 in response to the memory request from the accelerator based on the generated chain that corresponds to the accelerator.

When mapping is completed, the electronic device may set access according to the mapping result. Here, the processing of an access setting is similar to the processing of the access setting described above with reference to FIG. 5.

An additional virtual address space of one accelerator may be one or more virtual address spaces. For example, an additional virtual address space for the first accelerator GPUO may grow by being dynamically expanded multiple times, or multiple additional virtual address spaces for the first accelerator GPUO may be expanded at a time. When the additional virtual address space includes multiple additional virtual address spaces, the chain for a corresponding accelerator may connect a reserved virtual address space to all additional virtual address spaces.

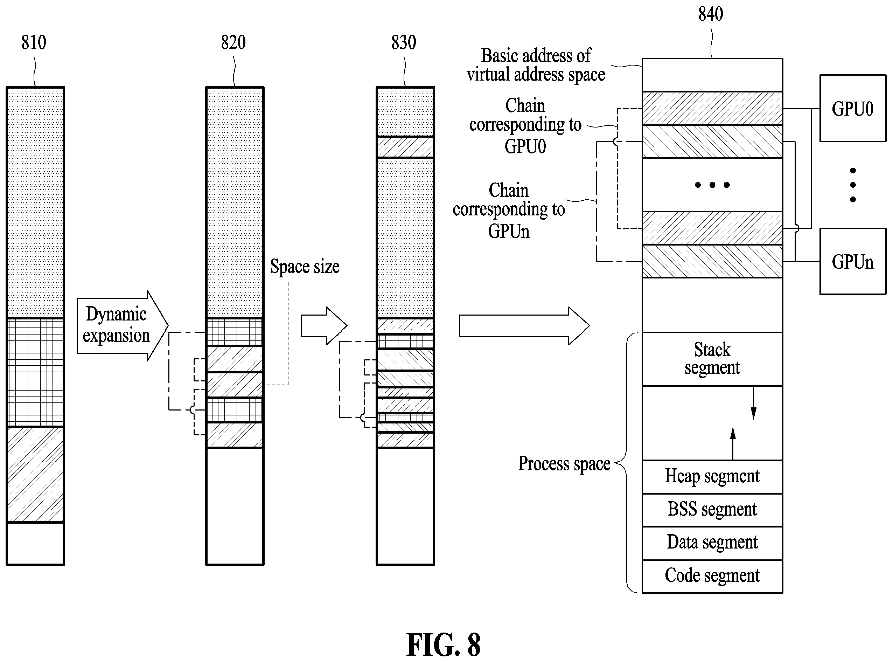

FIG. 8 illustrates an example of the use of a dynamically expanded virtual address space, according to one or more embodiments.

By dynamically expanding an additional virtual address space for an accelerator when a reserved virtual address space is insufficient, an electronic device may prevent confusion in the memory management when a virtual address to be allocated is outside the range of the reserved virtual address space and may still maintain accurate mapping between a virtual memory and a physical memory.

FIG. 8 illustrates different virtual address spaces reserved for different accelerators (e.g., the first accelerator GPUO, ..., to an nth accelerator GPUn) with respective different patterns. Referring to FIG. 8, drawing 810 shows that a virtual address space reserved without dynamic expand processing, drawings 820 and 830 show examples of a virtual address to be allocated to a dynamically expanded virtual address space (e.g., a virtual address is reserved and allocated in the minimum unit of an address allocation), and drawing 840 shows a corresponding configuration of a virtual memory. In FIG. 8, lines connecting the differently patterned sections represent different chains. The drawing 840 in FIG. 8 shows an example of specific information about a process virtual address space.

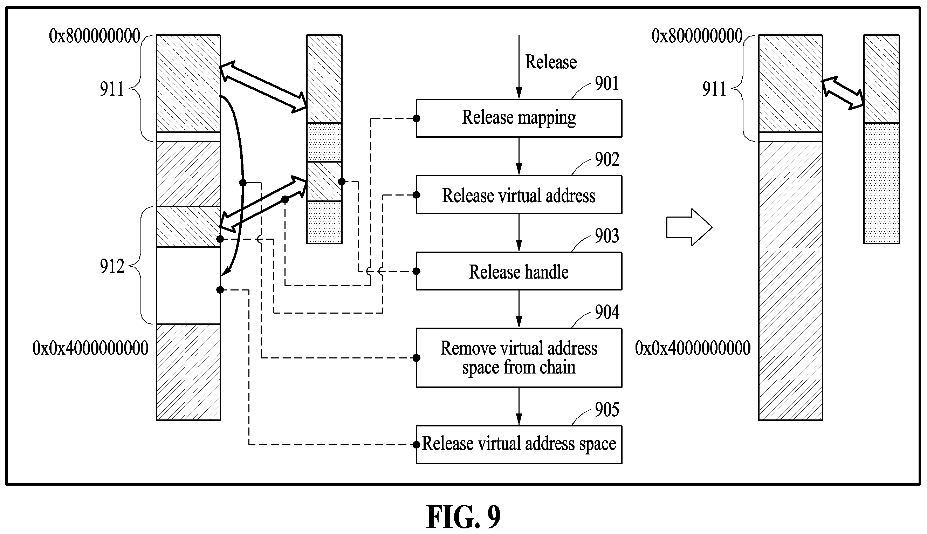

FIG. 9 illustrates an example of processing a memory reclamation, according to one or more embodiments.

After an electronic device has dynamically expanded an additional virtual address space 912 the electronic device may then perform memory reclamation management when a virtual address of the expanded additional virtual address space 912 is no longer used (e.g., an application program releases a memory of an accelerator). The memory reclamation processing is described next with reference to FIG. 9.

The electronic device may deallocate the virtual address of the additional virtual address space 912 in response to a memory reclamation request. To summarize, the electronic device may remove the additional virtual address space 912 from a chain corresponding to the accelerator.

In operation 901, the electronic device may release a mapping of a physical memory corresponding to the allocated virtual address of the additional virtual address space 912 in response to the memory reclamation request (e.g., an address release request) from the accelerator (which may be triggered by an external reclamation request). The electronic device may release a connection between a physical address and the virtual address in response to the memory reclamation request. For example, the electronic device may perform a connection release operation on a virtual address of a virtual memory and a physical address of a physical memory by calling a function of a virtual memory management interface.

In operation 902, the electronic device may release (deallocate) the allocated virtual address. For example, the electronic device may add a virtual address space corresponding to the deallocated virtual address to a free list. The virtual address space added to the free list may later be allocated to another processor (e.g., a host processor, an accelerator, or another accelerator) based on a memory request thereof.

In operation 903, the electronic device may release a handle of the physical memory corresponding to the virtual address released in operation 902.

For example, the electronic device may call a free function in response to a wrapper capturing cudaFree. In response to the free request, the electronic device may obtain the handle of the physical memory corresponding to a virtual address to be released from the mapping map and may release the handle of the physical memory by calling the virtual memory management function.

For example, the electronic device may update the mapping map in response to releasing the physical memory and the virtual address.

In operation 904, the electronic device may remove the additional virtual address space 912 from the chain. For example, the electronic device may remove information related to the additional virtual address space 912 from the chain corresponding to the accelerator.

In operation 905, the electronic device may release the additional virtual address space 912. That is, the electronic device may restore the additional virtual address space 912 to an unreserved state. Referring to a free result in FIG. 9, the electronic device may restore a virtual address space in the lower part of FIG. 9 to the unreserved state.

The memory reclamation request may be implemented for a first virtual address subspace 911 that is initially reserved (e.g., reserved before the memory request) in addition to the additional virtual address space 912 that is expanded (e.g., reserved after the memory request).

For example, in response to the memory reclamation request from the accelerator for reclamation of the first virtual address subspace 911, the electronic device may disassociate the allocated virtual address of the first virtual address subspace 911 from a corresponding physical memory, may deallocate the allocated virtual address of the first virtual address subspace 911, and may remove the chain corresponding to the accelerator.

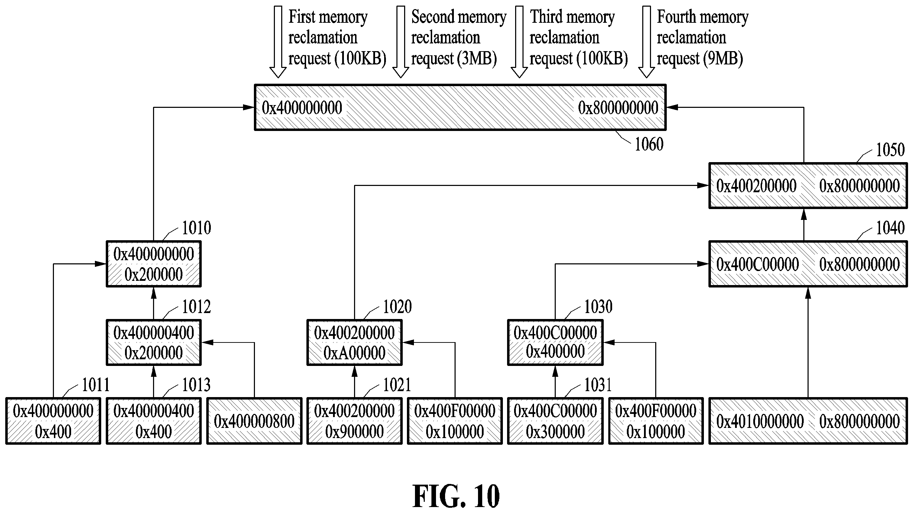

FIG. 10 illustrates an example of processing virtual address release corresponding to the example of FIG. 6.

In response to free requests, an electronic device may restore a virtual address space to an unallocated state by releasing an already allocated virtual address of the virtual address space in the order of the free requests. For example, in FIG. 10, four memory reclamation requests may be obtained in the order of a first memory reclamation request, a second memory reclamation request, a third memory reclamation request, and a fourth memory reclamation request.

The first memory reclamation request may be a free request for a virtual address space 1013 (e.g., the virtual address space 613 of FIG. 6) allocated based on the fourth memory request of FIG. 6. The second memory reclamation request may be a free request for a virtual address space 1031 (e.g., the virtual address space 631 of FIG. 6) allocated based on the third memory request of FIG. 6. The third memory reclamation request may be a free request for a virtual address space 1011 (e.g., the virtual address space 611 of FIG. 6) allocated based on the first memory request of FIG. 6. The fourth memory reclamation request may be a free request for the virtual address space 1013 (e.g., the virtual address space 613 of FIG. 6) allocated based on the second memory request of FIG. 6.

The electronic device may deallocate the virtual address space 1013 among first virtual address space blocks 1010 in response to the first memory reclamation request. By deallocating the virtual address space 1013, the electronic device may add, among the first virtual address space blocks 1010, the deallocated virtual address space 1013 to remaining address spaces 1012.

The electronic device may deallocate the virtual address space 1031 among third virtual address space blocks 1030 in response to the second memory reclamation request. By deallocating the virtual address space 1031, the electronic device may add, among the third virtual address space blocks 1030, the deallocated virtual address space 1031 to the remaining address spaces. Based on the whole third virtual address space block 1030 being unallocated and adjacent to remaining address spaces of first virtual address subspaces, the electronic device may obtain remaining address spaces 1040 by adding the third virtual address space blocks 1030 to the remaining address spaces of the first virtual address subspaces.

The electronic device may deallocate the virtual address space 1011 among the first virtual address space blocks 1010 in response to the third memory reclamation request. By deallocating the virtual address space 1011, the electronic device may add, among the first virtual address space blocks 1010, the deallocated virtual address space 1011 to remaining address spaces of the first virtual address space blocks 1010. As a result, the whole first virtual address space block 1010 may return to an unallocated state.

The electronic device may deallocate a virtual address space 1021 among second virtual address space blocks 1020 in response to the fourth memory reclamation request. By deallocating the virtual address space 1021, the electronic device may add, among the second virtual address space blocks 1020, the deallocated virtual address space 1021 to remaining address spaces of the second virtual address space blocks 1020. Based on the whole second virtual address space block 1020 being unallocated and adjacent to the remaining address spaces 1040 of the first virtual address subspaces, the electronic device may obtain remaining address spaces 1050 by adding the second virtual address space blocks 1020 to the remaining address spaces 1040 of the first virtual address subspaces.

Based on the whole second virtual address space blocks 1020 being unallocated and being adjacent to the remaining address spaces 1040 of the first virtual address subspaces, the electronic device may obtain remaining address spaces 1050 by adding the second virtual address space blocks 1020 to the remaining address spaces 1040 of the first virtual address subspaces.

However, the order in which a virtual address is released is not limited to the order described with reference to FIG. 10, and the virtual address may be released in any appropriate order (e.g., an address order of an already allocated virtual address in a virtual memory, the size order of an already allocated virtual address, etc.)

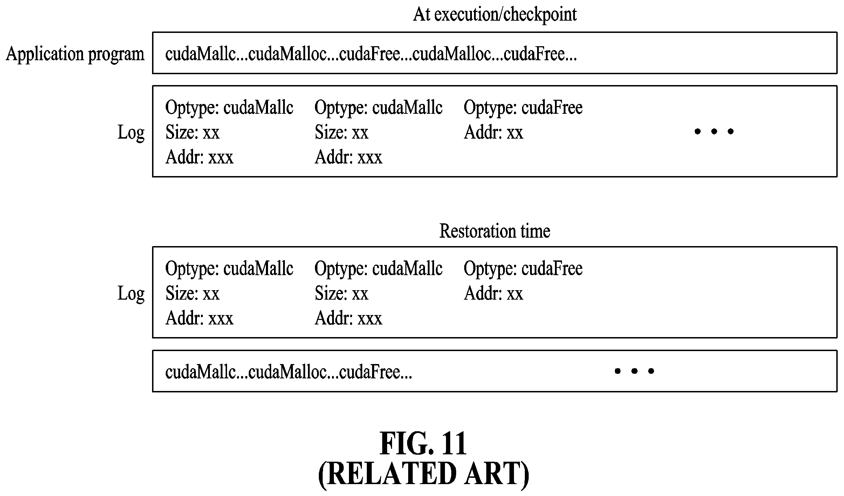

FIG. 11 illustrates an example of checkpoint restoration technology according to the related art.

As described above, when a failure occurs in a system operation, a virtual memory may be restored using checkpoint restoration technology.

In response to a checkpoint restoration request, an electronic device may restore each virtual address of one or more reserved virtual address spaces of one or more accelerators and each virtual address allocated to each accelerator in a virtual address space and/or may restore a virtual address allocated to a host processor in a virtual address space other than the one or more reserved virtual address spaces.

Specifically, referring to FIGS. 4A and 4B, based on a checkpoint of a process virtual address space at a checkpoint time point, a virtual address allocated to the host processor may be restored in a virtual address space (e.g., a second virtual address subspace) used for a host, a virtual address allocated to a first accelerator may be restored in a virtual address space used for the first accelerator (e.g., a first virtual address subspace reserved for the first accelerator), and a virtual address allocated to a second accelerator may be restored in a virtual address space used for the second accelerator (e.g., the first virtual address subspace reserved for the second accelerator).

Although FIGS. 4A and 4B illustrate examples of processing a virtual memory restoration in the order of an accelerator and a host processor, or a first accelerator, a second accelerator, and a host processor, the restoration order is not limited thereto, and the restoration may be performed in any suitable order.

In response to the checkpoint restoration request, the electronic device may restore a virtual address allocated to a corresponding accelerator in a reserved virtual address space and an additional virtual address space based on a chain corresponding to an accelerator. The electronic device may determine the reserved virtual address space and all additional virtual address spaces for the accelerator based on the chain corresponding to the accelerator and may restore a virtual address of the accelerator in the determined virtual address spaces.

The electronic device may obtain the checkpoint restoration request. In response to the checkpoint restoration request, the electronic device may restore a virtual address allocated to the accelerator in first virtual address subspaces reserved for the accelerator. In response to the checkpoint restoration request, the electronic device may restore a virtual address allocated to the host processor in second virtual address subspaces.

When the accelerator includes multiple accelerators, the electronic device may restore a virtual address allocated to a corresponding accelerator among the first virtual address subspaces reserved for each accelerator.

With checkpoint restoration technology of related art, an agent process may be used to perform checkpoint restoration, and there may be communication overhead between the agent process and an application process.

On the other hand, a checkpoint framework of the accelerator may dispose the agent process and an application program (or the application process) in the same address space through segmentation process technology, so a code process and the application program (or the application process) may be externally formed as one process, and accordingly, switching between processes may be implemented through context switching and communication overhead of the agent process may be reduced in the checkpoint restoration technology. The checkpoint restoration technology may be optimized through an address allocation and restoration of such an isolated virtual address space.

Depending on implementation, the electronic device might need to record a logs corresponding to respective processes when performing a checkpoint. When restoration of the checkpoint is performed, the electronic device might need to perform restoration by re-executing the application programs one by one according to the order of the recorded logs.

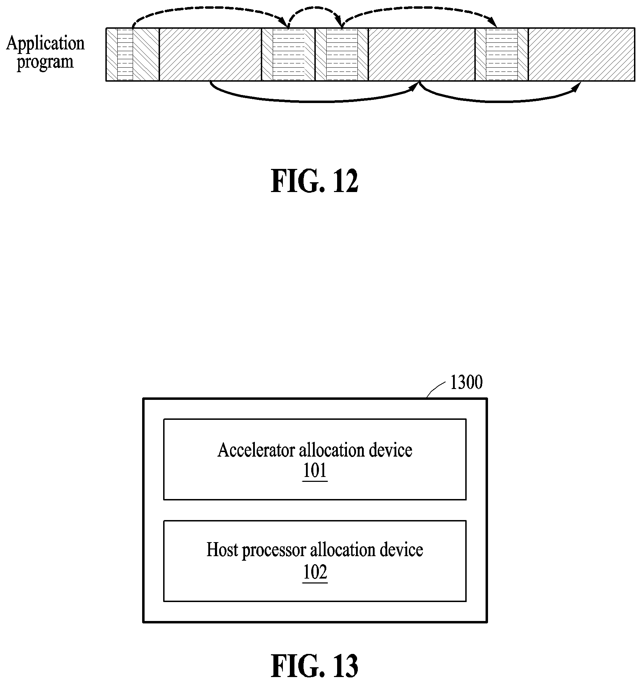

FIG. 12 illustrates an example of checkpoint restoration technology, according to one or more embodiments.

Virtual address spaces allocated to (or reserved for) accelerators may be divided from each other, and virtual address spaces allocated to (or reserved for) the same accelerator may be connected to each other through a chain. When restoration is performed using checkpoint restoration technology, an electronic device may process (e.g., restore) the restoration based on the chain in a virtual address space (e.g., a first virtual subspace) reserved for each accelerator and may not need to rely on logs for the restoration.

Since only an active state of an accelerator is maintained, the logs, if used, do not need to be recorded multiple times in the execution stage, and it is sufficient to request logs again for the accelerator in an active state at the checkpoint time point, so the number of duplicate API calls may be reduced when a state of the accelerator is restored.

As a result of testing a memory management method, in the processing of virtual memory restoration using a dynamic allocation and deallocation of virtual memory processing or checkpoint restoration technology, it may be seen that the execution time of the memory management method according to an example of the present disclosure is significantly reduced and the memory occupancy of an accelerator is also significantly reduced compared with the memory management method according to the related art.

In addition, the memory management method according to an example of the present disclosure may manage memories in a completely customized manner, so an address randomness problem may be avoided during system operation.

FIG. 13 illustrates an example of a structure of a virtual memory management device, according to one or more embodiments.

A virtual memory management device 1300 may include an accelerator allocation device 101 and a host processor allocation device 1302.

In response to a memory request from an accelerator, the accelerator allocation device 1301 may allocate a virtual address of a reserved virtual address space to the accelerator. That is, the accelerator allocation device 1301 may perform an operation corresponding to operation 301 in the virtual memory management method of FIG. 3. The accelerator allocation device 1301 may allocate a virtual address of a first virtual address subspace reserved for the accelerator to the accelerator in response to the memory request from the accelerator.

In response to a memory request from a host processor, the host processor allocation device 1302 may allocate a virtual address outside of the reserved virtual address space to the host processor. That is, the host processor allocation device 1302 may perform an operation corresponding to operation 302 in the virtual memory management method of FIG. 3. In response to the memory request from the host processor, the host processor allocation device 1302 may allocate to the host processor, from among virtual address spaces, a virtual address of a second virtual address subspace that is different from the first virtual address subspace .

Although not explicitly shown in FIG. 13, the virtual memory management device 1300 may further include a virtual memory reservation device. The virtual memory reservation device may divide, among the virtual address spaces, the first virtual address subspace and the second virtual address subspace by reserving the first virtual address subspace for the accelerator before the memory request from the accelerator or the memory request from the host processor is obtained.

The virtual address space may be reserved in units of virtual address blocks having a predetermined address space size.

The accelerator allocation device 1301 may allocate the virtual address of the reserved virtual address space to the accelerator in response to the memory request from the accelerator through an operation of dynamically allocating a virtual address for the accelerator in the reserved virtual address space, based on the size of a requested address space in the memory request from the accelerator and the predetermined address space size.

The accelerator allocation device 1301 may be configured to dynamically allocate the virtual address for the accelerator in the reserved virtual address space, based on the size of the requested address space in the memory request from the accelerator and the predetermined address space size, through operations of segmenting the minimum number of virtual address blocks corresponding to the memory request in the reserved virtual address space when the size of the requested address space in the memory request is greater than or equal to the predetermined address space size, allocating a virtual address corresponding to the memory request to the minimum number of segmented virtual address blocks, and allocating the virtual address corresponding to the memory request to a virtual address block having remaining address spaces of the reserved virtual address space when the size of the requested address space in the memory request is less the predetermined address space size.

The accelerator allocation device 1301 may be configured to allocate the virtual address corresponding to the memory request to the virtual address block having the remaining address spaces of the reserved virtual address space through an operation of allocating the virtual address corresponding to the memory request to the virtual address block when the size of the remaining address spaces is less than the predetermined address space size and there is a virtual address block that is greater than or equal to the size of the requested address space.

The accelerator allocation device 1301 may be configured to allocate the virtual address of the reserved virtual address space to the accelerator in response to the memory request from the accelerator through operations of additionally reserving, in response to the memory request from the accelerator, an additional virtual address space in a virtual address space that is not reserved and in which a virtual address is not allocated when the size of the remaining virtual address spaces of the reserved virtual address space is less than the size of the requested address space, generating a chain corresponding to the accelerator to connect the reserved virtual address space to the additional virtual address space, and allocating the virtual address for the accelerator requested in the memory request from the accelerator to the additional virtual address space based on the chain corresponding to the accelerator.

The virtual memory management device 1300 may further include an address space reclamation device (not shown).

In response to a memory reclamation request for the additional virtual address space, the address space reclamation device may be configured to release an allocated virtual address of the additional virtual address space and remove the additional virtual address space from the chain corresponding to the accelerator.

The virtual memory management device 1300 may further include a checkpoint restoration device (not shown).

The checkpoint restoration device may be configured to, in response to a C/R request, restore each virtual address of one or more reserved virtual address spaces of one or more accelerators and each virtual address allocated to each accelerator in the virtual address space and/or restore the virtual address allocated to the host processor in a virtual address space other than the one or more reserved virtual address spaces.

The virtual memory management device 1300 may perform an operation using CUDA.

The method in which each module of the virtual memory management device 1300 performs an operation is described in detail according to the example of the related method.

In addition, each module of the virtual memory management device 1300 may be implemented as hardware components and/or software components. For example, one skilled in the art may use a field-programmable gate array (FPGA) or an application-specific integrated circuit (ASIC) to implement each module depending on the processing performed by each defined module.

A method and device for managing a virtual memory, an electronic device, and a storage medium are provided to solve problems described above.

According to a first aspect of an example of the present disclosure, a method of managing a virtual memory may be provided, and the method may include, in response to a memory request from an accelerator, allocating a virtual address of a reserved virtual address space to the accelerator and in response to a memory request from a host processor, allocating a virtual address other than the reserved virtual address space to the host processor.

Optionally, the reserved virtual address space may be reserved in units of virtual address blocks having a predetermined address space size. In addition, the allocating of the virtual address of the reserved virtual address space to the accelerator in response to the memory request from the accelerator may include dynamically allocating a virtual address for the accelerator in the reserved virtual address space, based on the size of a requested address space in the memory request and the predetermined address space size.

In some embodiments, the dynamically allocating of a virtual address for the accelerator in the reserved virtual address space, based on the size of the requested address space in the memory request and the predetermined address space size, may include, when the size of the requested address space in the memory request is greater than or equal to the predetermined address space size, segmenting the minimum number of virtual address blocks corresponding to the memory request in the reserved virtual address space, allocating a virtual address corresponding to the memory request to the minimum number of segmented virtual address blocks, and when the size of the requested address space is less than the predetermined address space size, allocating the virtual address corresponding to the memory request to a virtual address block having remaining address spaces of the reserved virtual address space.

In some embodiments, the allocating of the virtual address corresponding to the memory request to a virtual address block having remaining address spaces of the reserved virtual address space may include allocating the virtual address corresponding to the memory request to the virtual address block when the size of the remaining address spaces is less than the predetermined address space size and there is a virtual address block that is greater than or equal to the size of the requested address space.

In some embodiments, the allocating of the virtual address of the reserved virtual address space to the accelerator in response to the memory request from the accelerator may further include, in response to the memory request from the accelerator, when the size of the remaining virtual address spaces of the reserved virtual address space is less than the size of the requested address space in the memory request, additionally reserving an additional virtual address space in a virtual address space that is not reserved and in which a virtual address is not allocated, generating a chain corresponding to the accelerator to connect the reserved virtual address space to the additional virtual address space, and allocating the virtual address for the accelerator requested in the memory request to the additional virtual address space based on the chain corresponding to the accelerator.

In some embodiments, the method may include, in response to a memory reclamation request for the additional virtual address space, releasing the allocated virtual addresses of the additional virtual address space and removing the additional virtual address space from the chain corresponding to the accelerator.

In some embodiments, the method may further include, in response to a C/R request, restoring each virtual address of one or more reserved virtual address spaces of one or more accelerators and each virtual address allocated to each accelerator in a virtual space and/or restoring a virtual address allocated to each host processor in a virtual address space other than the one or more reserved virtual address spaces.

In some embodiments, the method may be performed using a CUDA device.

According to a second aspect of an example of the present disclosure, a device for managing a virtual memory may be provided. The device may include an accelerator allocation device configured to allocate, in response to a memory request from an accelerator, a virtual address of a reserved virtual address space to the accelerator, and a host processor allocation device configured to allocate, in response to a memory request from a host processor, a virtual address other than the reserved virtual address space to the host processor.

In some embodiments, the reserved virtual address space may be reserved in units of virtual address blocks having a predetermined address space size. In addition, the accelerator allocation device may be configured to allocate the virtual address of the reserved virtual address space to the accelerator in response to the memory request from the accelerator through an operation of dynamically allocating a virtual address for the accelerator in the reserved virtual address space, based on the size of a requested address space in the memory request and the predetermined address space size.

In some embodiments, the accelerator allocation device may be configured to dynamically allocate the virtual address for the accelerator in the reserved virtual address space, based on the size of the requested address space in the memory request and the predetermined address space size, through operations of segmenting the minimum number of virtual address blocks corresponding to the memory request in the reserved virtual address space when the size of the requested address space in the memory request is greater than or equal to the predetermined address space size, allocating the virtual address corresponding to the memory request to the minimum number of segmented virtual address blocks, and allocating the virtual address corresponding to the memory request to a virtual address block having remaining address spaces of the reserved virtual address space when the size of the requested address space is less than the predetermined address space size.

In some embodiments, the accelerator allocation device may be configured to allocate the virtual address corresponding to the memory request to the virtual address block having remaining address spaces of the reserved virtual address space through an operation of allocating the virtual address corresponding to the memory request to the virtual address block when the size of the remaining address spaces is less than the predetermined address space size and there is a virtual address block that is greater than or equal to the size of the requested address space.

In some embodiments, the accelerator allocation device may be configured to allocate the virtual address of the reserved virtual address space to the accelerator in response to the memory request from the accelerator through operations of additionally reserving, in response to the memory request from the accelerator, an additional virtual address space in a virtual address space that is not reserved and in which a virtual address is not allocated when the size of the remaining virtual address spaces of the reserved virtual address space is less than the size of the requested address space in the memory request, generating a chain corresponding to the accelerator to connect the reserved virtual address space to the additional virtual address space, and allocating the virtual address for the accelerator requested in the memory request to the additional virtual address space based on the chain corresponding to the accelerator.

In some embodiments, in response to a memory reclamation request for the additional virtual address space, the device may further include an address space reclamation device configured to release the allocated virtual addresses of the additional virtual address space and remove the additional virtual address space from the chain corresponding to the accelerator.

In some embodiments, in response to a C/R request, the device may further include a checkpoint restoration device configured to restore each virtual address of one or more reserved virtual address spaces of one or more accelerators and each virtual address allocated to each accelerator in a virtual space and/or restore a virtual address allocated to each host processor in a virtual address space other than the one or more reserved virtual address spaces.

In some embodiments, the device may be configured for performing CUDA operations.

According to a third aspect of an example of the present disclosure, an electronic device may be provided, the electronic device may include at least one processor and at least one memory storing computer-executable instructions, wherein the computer-executable instructions, when executed by the at least one processor, cause the at least one processor to perform the virtual memory management method.

According to a fourth aspect of an example of the present disclosure, a computer-readable storage medium may be provided, wherein, when instructions of the computer-readable storage medium are executed by the at least one processor, cause the at least one processor to perform the virtual memory management method.

The method and device for managing a virtual memory, the electronic device, and the storage medium may secure a separate virtual address space for an accelerator and may realize division of virtual address spaces between the accelerator and a host processor, so the efficient management of memories may be possible, address randomness and address mismatch restoration may be prevented, communication overhead may be reduced, and the number of interface calls and execution times may be reduced.

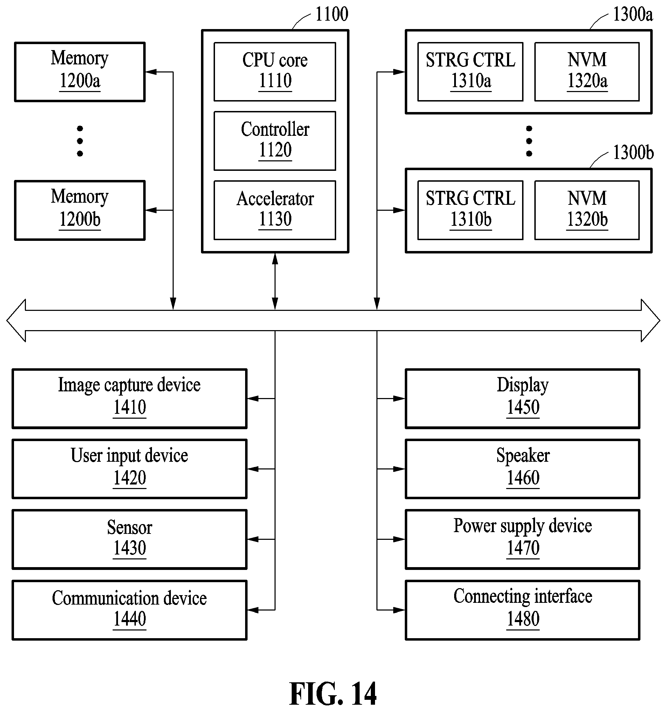

FIG. 14 illustrates an example of a system to which a storage device is applied, according to one or more embodiments. The system 1000 of FIG. 14 may generally be a mobile system such as a portable communication terminal (e.g., a mobile phone), a smartphone, a tablet personal computer (PC), a wearable device, a healthcare device, or an Internet of Things (IoT) device. However, the system 1000 of FIG. 14 may not be limited to a mobile system and may be a PC, a laptop computer, a server, a media player, or an automotive device (e.g., a navigation device).

Referring to FIG. 14, the system 1000 may include a main processor 1100, memories (e.g., a memory 1200a and a memory 1200b), and storage devices (e.g., a storage device 1300a and a storage device 1300b). In addition, the system 1000 may include at least one of an image capture device 1410, a user input device 1420, a sensor 1430, a communication device 1440, a display 1450, a speaker 1460, a power supply device 1470, and a connecting interface 1480.

The main processor 1100 may control the overall operation of the system 1000, and more specifically, may control operations of other components included in the system 1000. The main processor 1100 may be implemented as a general-purpose processor, a special processor, or an AP.

The main processor 1100 may include at least one CPU core 1110 and may also include a controller 1120 for controlling the memory 1200a and the memory 1200b and/or the storage device 1300a and the storage device 1300b. The main processor 1100 may further include an accelerator 1130, which is a dedicated circuit for a high-speed data task for an AI data task. The accelerator 1130 may include a GPU, an NPU, and/or a DPU and may be implemented as a chip that is physically separated from other components of the main processor 1100.

The memory 1200a and the memory 1200b may be used as main storage devices of the system 1000. The memory 1200a and the memory 1200b may each include a volatile memory such as static random-access memory (SRAM) and/or DRAM. However, the memory 1200a and the memory 1200b may also each include a non-volatile memory such as flash memory, phase change RAM (PRAM), and/or resistive RAM (RRAM). The memory 1200a and the memory 1200b may be implemented in the same package as the main processor 1100.

The storage device 1300a and the storage device 1300b may be used as non-volatile storage devices configured to store data regardless of whether power is supplied and may have a storage capacity that is greater than that of the memory 1200a and the memory 1200b. The storage device 1300a and the storage device 1300b may each include a memory controller (STRG CTRL) 1310a and a memory controller (STRG CTRL) 1310b, and a non-volatile memory (NVM) 1320a and a non-volatile memory (NVM) 1320b and may each be configured to store data by controlling the STRG CTRL 1310a and the STRG CTRL 1310b. The NVM 1320a and the NVM 1320b may each include a V-NAND flash memory having a two-dimensional (2D) or three-dimensional (3D) structure. However, the NVM 1320a and the NVM 1320b may also include other types of NVM, for example, PRAM and/or RRAM.

The storage device 1300a and the storage device 1300b may be physically separated from the main processor 1100 and included in the system 1000 or may be implemented in the same package as the main processor 1100. In addition, the storage device 1300a and the storage device 1300b may be a type of a solid-state drive (SSD) or a memory card and may be detachably coupled to other components of the system 1000 through an interface such as the connecting interface 1480 described below. The storage device 1300a and the storage device 1300b may be, but are not limited to, devices that apply a standard protocol such as universal flash storage (UFS), an embedded multimedia card (eMMC), or an NVMe.

The image capture device 1410 may capture a still image or a moving image. The image capture device 1410 may include a camera, a portable video camera, and/or a webcam.

The user input device 1420 may receive various types of data input from a user of the system 1000 and may include a touchpad, a key area, a keyboard, a mouse, a microphone, etc.

The sensor 1430 may detect various types of physical quantities that may be obtained from outside of the system 1000 and may convert the detected physical quantities into an electrical signal. The sensor 1430 may include a temperature sensor, a pressure sensor, an illumination sensor, a position sensor, an acceleration sensor, a bio sensor, and/or a gyroscope sensor.

The communication device 1440 may transmit and receive a signal to and from other devices outside of the system 1000 according to various communication protocols. The communication device 1440 may include an antenna, a transceiver, or a modem.

The display 1450 and the speaker 1460 may each be used as an output device configured to output visual and auditory information to the user of the system 1000.

The power supply device 1470 may appropriately convert power supplied from a battery (not shown) built in the system 1000 and/or an external power source and may supply the converted power to each component of the system 1000.

The connecting interface 1480 may connect between the system 1000 and an external device, in which the external device may be connected to the system 1000 and may receive data from the system 1000. The connecting interface 1480 may be implemented, for example, using various interface methods such as advanced technology attachment (ATA), serial ATA (SATA), external serial ATA (e-SATA), small computer system interface (SCSI), serial SCSI (SAS), peripheral component interconnect (PCI), PCI express (PCIe), NVMe, IEEE 1394, universal serial bus (USB) interface, secure digital (SD) card interface, multimedia card (MMC) interface, eMMC interface, UFS interface, embedded UFS (eUFS) interface, compact flash (CF) card interface, etc.

In addition, an electronic device may be provided, and the electronic device may include at least one processor and at least one memory storing computer-executable instructions, wherein the computer-executable instructions, when executed by the at least one processor, cause the at least one processor to perform the virtual memory management method.

The electronic device may be a PC, a tablet device, a personal digital assistant (PDA), a smartphone, or other devices capable of executing the above instruction set. Here, the electronic device may not need to be a single electronic device and may be any device or assembly of a circuit capable of executing the above instructions (or an instruction set) alone or jointly. The electronic device may also be a part of an integrated control system or a system administrator or may be configured as a portable electronic device interconnected to a local or remote (e.g., via wireless transmission) interface.

In the electronic device, the at least one processor may include a CPU, a GPU, a programmable logic device, a dedicated processor system, a microcontroller, or a microprocessor. In addition, the at least one processor may further include, for example, but is not limited thereto, an analog processor, a digital processor, a microprocessor, a multicore processor, a processor array, or a network processor.

The at least one processor may execute instructions or code stored in the at least one memory, and the at least one memory may further store data. The instructions and data may also be transmitted and received over a network via a network interface device that may use any known transport protocol, in which the network interface device may use any known transport protocol.

For example, the at least one memory may be integrated with the at least one processor by arranging RAM or flash memory in an integrated circuit microprocessor or the like. The at least one memory may also include a separate device such as an external disk drive, a storage array, or other storage devices that may be used by any database system. The at least one memory and the at least one processor may be operatively connected or may communicate through an input/output (I/O) port or a network connection so that the at least one processor may read files stored in the at least one memory.

In addition, the electronic device may further include a video display (e.g., a liquid crystal display (LCD)) and a user interaction interface (e.g., a keyboard, a mouse, or a touch input device). All components of the electronic device may be connected to one another through a bus and/or a network.

The computing apparatuses, the electronic devices, the processors, the storage devices, the memories, the displays, the information output system and hardware, and other apparatuses, devices, units, modules, and components described herein with respect to FIGS. 1-14 are implemented by or representative of hardware components. Examples of hardware components that may be used to perform the operations described in this application where appropriate include controllers, sensors, generators, drivers, memories, comparators, arithmetic logic units, adders, subtractors, multipliers, dividers, integrators, and any other electronic components configured to perform the operations described in this application. In other examples, one or more of the hardware components that perform the operations described in this application are implemented by computing hardware, for example, by one or more processors or computers. A processor or computer may be implemented by one or more processing elements, such as an array of logic gates, a controller and an arithmetic logic unit, a digital signal processor, a microcomputer, a programmable logic controller, a field-programmable gate array, a programmable logic array, a microprocessor, or any other device or combination of devices that is configured to respond to and execute instructions in a defined manner to achieve a desired result. In one example, a processor or computer includes, or is connected to, one or more memories storing instructions or software that are executed by the processor or computer. Hardware components implemented by a processor or computer may execute instructions or software, such as an operating system (OS) and one or more software applications that run on the OS, to perform the operations described in this application. The hardware components may also access, manipulate, process, create, and store data in response to execution of the instructions or software. For simplicity, the singular term "processor" or "computer" may be used in the description of the examples described in this application, but in other examples multiple processors or computers may be used, or a processor or computer may include multiple processing elements, or multiple types of processing elements, or both. For example, a single hardware component or two or more hardware components may be implemented by a single processor, or two or more processors, or a processor and a controller. One or more hardware components may be implemented by one or more processors, or a processor and a controller, and one or more other hardware components may be implemented by one or more other processors, or another processor and another controller. One or more processors, or a processor and a controller, may implement a single hardware component, or two or more hardware components. A hardware component may have any one or more of different processing configurations, examples of which include a single processor, independent processors, parallel processors, single-instruction single-data (SISD) multiprocessing, single-instruction multiple-data (SIMD) multiprocessing, multiple-instruction single-data (MISD) multiprocessing, and multiple-instruction multiple-data (MIMD) multiprocessing.

The methods illustrated in FIGS. 1-14 that perform the operations described in this application are performed by computing hardware, for example, by one or more processors or computers, implemented as described above implementing instructions or software to perform the operations described in this application that are performed by the methods. For example, a single operation or two or more operations may be performed by a single processor, or two or more processors, or a processor and a controller. One or more operations may be performed by one or more processors, or a processor and a controller, and one or more other operations may be performed by one or more other processors, or another processor and another controller. One or more processors, or a processor and a controller, may perform a single operation, or two or more operations.

Instructions or software to control computing hardware, for example, one or more processors or computers, to implement the hardware components and perform the methods as described above may be written as computer programs, code segments, instructions or any combination thereof, for individually or collectively instructing or configuring the one or more processors or computers to operate as a machine or special-purpose computer to perform the operations that are performed by the hardware components and the methods as described above. In one example, the instructions or software include machine code that is directly executed by the one or more processors or computers, such as machine code produced by a compiler. In another example, the instructions or software includes higher-level code that is executed by the one or more processors or computer using an interpreter. The instructions or software may be written using any programming language based on the block diagrams and the flow charts illustrated in the drawings and the corresponding descriptions herein, which disclose algorithms for performing the operations that are performed by the hardware components and the methods as described above.

The instructions or software to control computing hardware, for example, one or more processors or computers, to implement the hardware components and perform the methods as described above, and any associated data, data files, and data structures, may be recorded, stored, or fixed in or on one or more non-transitory computer-readable storage media. Examples of a non-transitory computer-readable storage medium include read-only memory (ROM), random-access programmable read only memory (PROM), electrically erasable programmable read-only memory (EEPROM), random-access memory (RAM), dynamic random access memory (DRAM), static random access memory (SRAM), flash memory, non-volatile memory, CD-ROMs, CD-Rs, CD+Rs, CD-RWs, CD+RWs, DVD-ROMs, DVD- Rs, DVD+Rs, DVD-RWs, DVD+RWs, DVD-RAMs, BD-ROMs, BD-Rs, BD-R LTHs, BD-REs, blue-ray or optical disk storage, hard disk drive (HDD), solid state drive (SSD), flash memory, a card type memory such as multimedia card micro or a card (for example, secure digital (SD) or extreme digital (XD)), magnetic tapes, floppy disks, magneto-optical data storage devices, optical data storage devices, hard disks, solid-state disks, and any other device that is configured to store the instructions or software and any associated data, data files, and data structures in a non-transitory manner and provide the instructions or software and any associated data, data files, and data structures to one or more processors or computers so that the one or more processors or computers can execute the instructions. In one example, the instructions or software and any associated data, data files, and data structures are distributed over network-coupled computer systems so that the instructions and software and any associated data, data files, and data structures are stored, accessed, and executed in a distributed fashion by the one or more processors or computers.

While this disclosure includes specific examples, it will be apparent after an understanding of the disclosure of this application that various changes in form and details may be made in these examples without departing from the scope of the claims. The examples described herein are to be considered in a descriptive sense only, and not for purposes of limitation. Descriptions of features or aspects in each example are to be considered as being applicable to similar features or aspects in other examples. Suitable results may be achieved if the described techniques are performed in a different order, and/or if components in a described system, architecture, device, or circuit are combined in a different manner, and/or replaced or supplemented by other components or their equivalents.

Therefore, in addition to the above disclosure, the scope of the disclosure may also be defined by the claims.

## Claims

1. A method of managing a unified virtual memory, UVM, the method performed by an electronic device comprising an accelerator and a host processor, the method comprising:
in response to a memory request from the accelerator, allocating (301) to the accelerator,
from among virtual address spaces (100) of the UVM, a virtual address of first virtual address subspaces (511, 711, 911) reserved for the accelerator; and
in response to a memory request from the host processor, allocating (302) to the host processor, from among the virtual address spaces (100), a virtual address of second virtual address subspaces (512, 712, 912) that are exclusive of the first virtual address subspaces (511, 711, 911).

2. The method of claim 1, further comprising:
dividing, among the virtual address spaces (100) of the UVM, the first virtual address subspaces (511, 711, 911) and the second virtual address subspaces (512, 712, 912) by reserving the first virtual address subspaces (511, 711, 911) for the accelerator before the memory request from the accelerator and before the memory request from the host processor.

3. The method of claim 1 or 2, wherein
the first virtual address subspaces (511, 711, 911) have an address space size that is a integer multiple of a unit size of an address space, and
the allocating of the virtual address of the first virtual address subspaces (511, 711, 911) is based on a size of the memory request from the accelerator and based on the unit size.

4. The method of claim 3, wherein the dynamically allocating of the virtual address of at least a portion of the first virtual address subspaces comprises:
in response to the size of the memory request of the accelerator being greater than or equal to the unit size, segmenting, among the first virtual address subspaces (511, 711, 911), a virtual address space block having the address space size that is the multiple of the unit size capable of covering the requested address space; and allocating a virtual address of the segmented virtual address space block to satisfy the memory request from the accelerator, or
wherein the dynamically allocating of the virtual address of at least a portion of the first virtual address subspaces (511, 711, 911) comprises allocating, among the first virtual address subspaces (511, 711, 911), a virtual address of a virtual address space block having remaining address spaces to satisfy the memory request from the accelerator in response to the size of the memory request from the accelerator being less than the unit size.

5. The method of claim 4, wherein the allocating of the virtual address of the virtual address space block having the remaining address spaces comprises allocating a virtual address of the remaining address spaces to satisfy the memory request from the accelerator in response to a size of the remaining address spaces of the virtual address space block being less than the unit size and being greater than or equal to the size of the requested address space.

6. The method of one of claims 1 to 5, wherein
the electronic device comprises multiple accelerators, including the accelerator,
the first virtual address subspaces (511, 711, 911) comprise a non-overlapping first virtual address spaces, wherein each of the non-overlapping first virtual address spaces is reserved for a respectively corresponding accelerator among the accelerators, and
the allocating of the virtual address of the first virtual address subspaces (511, 711, 911) reserved for the accelerator to the accelerator comprises:
determining, among the accelerators, a target accelerator associated with the memory request from the accelerator; and
allocating a virtual address of first virtual address subspaces reserved for the determined target accelerator to the determined target accelerator.

7. The method of one of claims 1 to 6, wherein the allocating of the virtual address of the first virtual address subspaces (511, 711, 911) reserved for the accelerator to the accelerator comprises:
in response to the memory request from the accelerator, additionally reserving an additional virtual address space for the accelerator in response to a size of remaining virtual address spaces of the first virtual address subspaces (511, 711, 911) being less than a size of a requested address space associated with the memory request from the accelerator;
generating a chain corresponding to the accelerator connecting the first virtual address subspaces (511, 711, 911) to the additional virtual address space; and
based on the generated chain corresponding to the accelerator, allocating a virtual address of the additional virtual address space to satisfy the memory request from the accelerator,
wherein the method further comprises:
deallocating the virtual address of the additional virtual address space in response to a memory reclamation request; and
removing the additional virtual address space from the generated chain corresponding to the accelerator.

8. The method of one of claims 1 to 7, wherein the method further comprises:
restoring a virtual address allocated to the accelerator in the first virtual address subspaces (511, 711, 911) reserved for the accelerator in response to a checkpoint restoration request; and
restoring a virtual address allocated to the host processor in the second virtual address subspaces (512, 712, 912) in response to the checkpoint restoration request, and
wherein the electronic device comprises multiple accelerators including the accelerator, and the restoring of the virtual address allocated to the accelerator comprises restoring a virtual address specifically allocated to a corresponding accelerator in first virtual address subspaces reserved for each accelerator.

9. The method of one of claims 1 to 8, wherein the electronic device is configured with a compute unified device architecture, CUDA, implemented at least in part by the host processor and the accelerator.

10. A non-transitory computer-readable storage medium storing instructions that, when executed by the host processor and/or the accelerator, cause the host processor and/or the accelerator to perform the method of one of claims 1 to 9.

11. A device for managing a virtual memory, the device comprising:
a host processor configured to, in response to a memory request from an accelerator, allocate (301) to the accelerator, from among virtual address spaces (100), a virtual address of first virtual address subspaces (511, 711, 911) reserved for the accelerator; and
a host processor allocation device configured to, in response to a memory request from a host processor, allocate (302) to the host processor, from among the virtual address spaces, a virtual address of second virtual address subspaces (512, 712, 912) that are exclusive of the first virtual address subspaces (511, 711, 911).

12. The device of claim 11, further comprising:
a virtual memory reservation device configured to divide, among the virtual address spaces, the first virtual address subspaces (511, 711, 911) and the second virtual address subspaces (512, 712, 912) by reserving the first virtual address spaces for the accelerator before the memory request from the accelerator and before the memory request from the host processor.

13. The device of claim 11 or 12, wherein the first virtual address subspaces (511, 711, 911) have an address space size that is a multiple of a unit size of an address space, and the host processor is further configured to dynamically allocate a virtual address of at least a portion of the first virtual address subspaces (511, 711, 911) to the accelerator, based on a size of the memory request from the accelerator and the unit size, or
wherein the accelerator allocation device is configured to restore a virtual address allocated to the accelerator in the first virtual address subspaces (511, 711, 911) reserved for the accelerator in response to a checkpoint restoration request, and the host processor allocation device is configured to restore a virtual address allocated to the host processor in the second virtual address subspaces (512, 712, 912) in response to the checkpoint restoration request.

14. The device of one of claims 11 to 13, wherein the device comprises multiple accelerators, including the accelerator,
the first virtual address subspaces (511, 711, 911) comprise non-overlapping first virtual address spaces, wherein each of the non-overlapping first virtual address subspaces (511, 711, 911) is reserved for a respectively corresponding accelerator among the accelerators, and
the host processor is further configured to:
determine, from among the accelerators, a target accelerator associated with the memory request from the accelerator; and
allocate a virtual address of first virtual address subspaces reserved for the determined target accelerator to the determined target accelerator.

15. The device of one of claims 11 to 14, wherein the host processor is further configured to:
in response to the memory request from the accelerator, additionally reserve an additional virtual address space for the accelerator in response to a size of remaining virtual address spaces of the first virtual address subspaces (511, 711, 911) being less than a size of a requested address space associated with the memory request from the accelerator;
generate a chain corresponding to the accelerator connecting the first virtual address subspaces (511, 711, 911) to the additional virtual address space; and
based on the generated chain corresponding to the accelerator, allocate a virtual address of the additional virtual address space to satisfy the memory request from the accelerator,
wherein the host processor is further configured to:
deallocate the virtual address of the additional virtual address space in response to a memory reclamation request; and
remove the additional virtual address space from the generated chain corresponding to the accelerator.

## Patentansprüche

1. Verfahren zum Verwalten eines UVM-Speichers (unified virtual memory - UVM), wobei das Verfahren von einer elektronischen Vorrichtung durchgeführt wird, die einen Beschleuniger sowie einen Host-Prozessor umfasst, und das Verfahren umfasst:
Zuweisen (301) einer virtuellen Adresse für den Beschleuniger reservierter erster virtueller Adress-Teilräume (511, 711, 911) unter virtuellen Adressräumen (100) des UVM in Reaktion auf eine Speicheranforderung von dem Beschleuniger; und
Zuweisen (302) einer virtuellen Adresse zweiter virtueller Adress-Teilräume (512, 712, 912), die die ersten virtuellen Adress-Teilräume (511, 711, 911) ausschließen, unter den virtuellen Adressräumen (100) in Reaktion auf eine Speicheranforderung von dem Host-Prozessor.

2. Verfahren nach Anspruch 1, das des Weiteren umfasst:
Teilen der ersten virtuellen Adress-Teilräume (511, 711, 911) und der zweiten virtuellen Adress-Teilräume (512, 712, 912) unter den virtuellen Adressräumen (100) des UVM durch Reservieren der ersten virtuellen Adress-Teilräume (511, 711, 911) für den Beschleuniger vor der Speicheranforderung von dem Beschleuniger und vor der Speicheranforderung von dem Host-Prozessor.

3. Verfahren nach Anspruch 1 oder 2, wobei
die ersten virtuellen Adress-Teilräume (511, 711, 911) eine Adressraum-Größe haben, die ein ganzes Vielfaches einer Einzelgröße eines Adressraums ist, und
das Zuweisen der virtuellen Adressen der ersten virtuellen Adress-Teilräume (511, 711, 911) auf einer Größe der Speicheranforderung von dem Beschleuniger basiert und auf der Einzelgröße basiert.

4. Verfahren nach Anspruch 3, wobei das dynamische Zuweisen der virtuellen Adresse wenigstens eines Teils der ersten virtuellen Adress-Teilräume umfasst:
Segmentieren eines virtuellen Adressraum-Blocks mit der Adressraum-Größe, die das Vielfache der Einzelgröße ist, und den angeforderten Adressraum abdecken kann, in Reaktion darauf, dass die Größe der Speicheranforderung des Beschleunigers genauso groß ist wie oder größer als die Einzelgröße; und Zuweisen einer virtuellen Adresse des frequentierten virtuellen Adressraum-Blocks, um die Speicheranforderung von dem Beschleuniger zu erfüllen, oder
wobei das dynamische Zuweisen der virtuellen Adresse wenigstens eines Teils der ersten virtuellen Adress-Teilräume (511, 711, 911) Zuweisen einer virtuellen Adresse eines virtuellen Adressraum-Blocks unter den ersten virtuellen Adress-Teilräumen (511, 711, 911) mit verbleibenden Adressräumen zum Erfüllen der Speicheranforderung von dem Beschleuniger in Reaktion darauf umfasst, dass die Größe der Speicheranforderung von dem Beschleuniger geringer ist als die Einzelgröße.

5. Verfahren nach Anspruch 4, wobei das Zuweisen der virtuellen Adresse des virtuellen Adressraum-Blocks mit den verbleibenden Adressräumen Zuweisen einer virtuellen Adresse der verbleibenden Adressräume zum Erfüllen der Speicheranforderung von dem Beschleuniger in Reaktion darauf umfasst, dass eine Größe der verbleibenden Adressräume des virtuellen Adressraum-Blocks geringer ist als die Einheitsgröße und genauso groß ist wie oder größer als die Größe des angeforderten Adressraums.

6. Verfahren nach einem der Ansprüche 1 bis 5, wobei
die elektronische Vorrichtung mehrere den Beschleuniger einschließende Beschleuniger umfasst,
die ersten virtuellen Adress-Teilräume (511, 711, 911) nicht überlappende erste virtuelle Adressräume umfassen, wobei jeder der nicht überlappenden ersten virtuellen Adressräume für einen jeweils entsprechenden Beschleuniger unter den Beschleunigern reserviert wird, und
das Zuweisen der virtuellen Adresse der für den Beschleuniger reservierten ersten virtuellen Adress-Teilräume (511, 711, 911) zu dem Beschleuniger umfasst:
Bestimmen eines Ziel-Beschleunigers, der mit der Speicheranforderung von dem Beschleuniger zusammenhängt, unter den Beschleunigern; sowie
Zuweisen einer virtuellen Adresse für den bestimmten Ziel-Beschleuniger reservierter erster virtueller Adress-Teilräume zu dem bestimmten Ziel-Beschleuniger.

7. Verfahren nach einem der Ansprüche 1 bis 6, wobei das Zuweisen der virtuellen Adresse der für den Beschleuniger reservierten ersten virtuellen Adress-Teilräume (511, 711, 911) zu dem Beschleuniger umfasst:
zusätzliches Reservieren eines zusätzlichen virtuellen Adressraums für den Beschleuniger in Reaktion darauf, dass eine Größe verbleibender virtueller Adressräume der ersten virtuellen Adress-Teilräume (511, 711, 911) geringer ist als eine Größe eines mit der Speicheranforderung von dem Beschleuniger zusammenhängenden angeforderten Adressraums in Reaktion auf die Speicheranforderung von dem Beschleuniger;
Erzeugen einer dem Beschleuniger entsprechenden Kette, die die ersten virtuellen Adress-Teilräume (511, 711, 911) mit dem zusätzlichen virtuellen Adressraum verbindet; sowie
Zuweisen einer virtuellen Adresse des zusätzlichen virtuellen Adressraums zum Erfüllen der Speicheranforderung von dem Beschleuniger auf Basis der dem Beschleuniger entsprechenden erzeugten Kette,
wobei das Verfahren des Weiteren umfasst:
Freigeben der virtuellen Adresse des zusätzlichen virtuellen Adressraums in Reaktion auf eine Speicherfreigabeanforderung; sowie
Entfernen des zusätzlichen virtuellen Adressraums aus der dem Beschleuniger entsprechenden erzeugten Kette.

8. Verfahren nach einem der Ansprüche 1 bis 7, wobei das Verfahren des Weiteren umfasst:
Wiederherstellen einer dem Beschleuniger in den für den Beschleuniger reservierten ersten virtuellen Adress-Teilräumen (511, 711, 911) zugewiesenen virtuellen Adresse in Reaktion auf eine Checkpoint-Wiederherstellungsanforderung; sowie
Wiederherstellen einer dem Host-Prozessor in den zweiten virtuellen Adress-Teilräumen (512, 712, 912) zugewiesenen virtuellen Adresse in Reaktion auf die Checkpoint-Wiederherstellungsanforderung, und
wobei die elektronische Vorrichtung mehrere, den Beschleuniger einschließende Beschleuniger umfasst und das Wiederherstellen der dem Beschleuniger zugewiesenen virtuellen Adresse Wiederherstellen einer speziell einem entsprechenden Beschleuniger in für jeden Beschleuniger reservierten ersten virtuellen Adress-Teilräumen zugewiesenen virtuellen Adresse umfasst.

9. Verfahren nach einem der Ansprüche 1 bis 8, wobei die elektronische Vorrichtung mit einer CUDA konfiguriert ist, die wenigstens teilweise mittels des Host-Prozessors sowie des Beschleunigers implementiert wird.

10. Nichtflüchtiges computerlesbares Speichermedium, das Befehle speichert, die, wenn sie von dem Host-Prozessor und/oder dem Beschleuniger ausgeführt werden, den Host-Prozessor und/oder den Beschleuniger veranlassen, das Verfahren nach einem der Ansprüche 1 bis 9 durchzuführen.

11. Vorrichtung zum Verwalten eines virtuellen Speichers, wobei die Vorrichtung umfasst:
einen Host-Prozessor, der so konfiguriert ist, dass er in Reaktion auf eine Speicheranforderung von einem Beschleuniger dem Beschleuniger von virtuellen Adressräumen (100) eine virtuelle Adresse für den Beschleuniger reservierter erster virtueller Adress-Teilräume (511, 711, 911) zuweist (301); sowie
eine Host-Prozessor-Zuweisungsvorrichtung, die so konfiguriert ist, dass sie in Reaktion auf eine Speicheranforderung von einem Host-Prozessor dem Host-Prozessor von den virtuellen Adressräumen eine virtuelle Adresse zweiter virtueller Adress-Teilräume (512, 712, 912) zuweist (302), die die ersten virtuellen Adress-Teilräume (511, 711, 911) ausschließen.

12. Vorrichtung nach Anspruch 11, die des Weiteren umfasst:
eine Vorrichtung für Reservierung von virtuellem Speicher, die die ersten virtuellen Adress-Teilräume (511, 711, 911) und die zweiten virtuellen Adress-Teilräume (512, 712, 912) durch Reservieren der ersten virtuellen Adress-Teilräume für den Beschleuniger vor der Speicheranforderung von dem Beschleuniger und vor der Speicheranforderung von dem Host-Prozessor unter den virtuellen Adressräumen teilt.

13. Vorrichtung nach Anspruch 11 oder 12, wobei die ersten virtuellen Adress-Teilräume (511, 711, 911) eine Adressraum-Größe haben, die ein Vielfaches einer Einheitsgröße eines Adressraums ist, und der Host-Prozessor des Weiteren so konfiguriert ist, dass er eine virtuelle Adresse wenigstens eines Teils der ersten virtuellen Adress-Teilräume (511, 711, 911) dem Beschleuniger auf Basis einer Größe der Speicheranforderung von dem Beschleuniger sowie der Einheitsgröße dynamisch zuweist, oder
wobei die Beschleuniger-Zuweisungsvorrichtung so konfiguriert ist, dass sie eine dem Beschleuniger in den für den Beschleuniger reservierten ersten virtuellen Adress-Teilräumen (511, 711, 911) zugewiesene virtuelle Adresse in Reaktion auf eine Checkpoint-Wiederherstellungsanforderung wiederherstellt, und die Host-Prozessor-Zuweisungsvorrichtung so konfiguriert ist, dass sie eine dem Host-Prozessor in den zweiten Adress-Teilräumen (512, 712, 912) zugewiesene virtuelle Adresse in Reaktion auf die Checkpoint-Wiederherstellungsanforderung wiederherstellt.

14. Vorrichtung nach einem der Ansprüche 11 bis 13, wobei die Vorrichtung mehrere den Beschleuniger einschließende Beschleuniger umfasst,
die ersten virtuellen Adress-Teilräume (511, 711, 911) nicht überlappende erste virtuelle Adressräume umfassen, wobei jeder der nicht überlappenden ersten virtuellen Adress-Teilräume (511, 711, 911) für einen jeweils entsprechenden Beschleuniger unter den Beschleunigern reserviert ist, und
der Host-Prozessor des Weiteren konfiguriert ist zum:
Bestimmen eines Ziel-Beschleunigers, der mit der Speicheranforderung von dem Beschleuniger zusammenhängt, unter den Beschleunigern; sowie
Zuweisen einer virtuellen Adresse für den bestimmten Ziel-Beschleuniger reservierter erster virtueller Adress-Teilräume zu dem bestimmten Ziel-Beschleuniger.

15. Vorrichtung nach einem der Ansprüche 11 bis 14, wobei der Host-Prozessor des Weiteren konfiguriert ist zum:
zusätzlichen Reservieren eines zusätzlichen virtuellen Adressraums für den Beschleuniger in Reaktion auf die Speicheranforderung von dem Beschleuniger in Reaktion darauf, dass eine Größe verbleibender virtueller Adressräume für die ersten virtuellen Adress-Teilräume (511, 711, 911) geringer ist als eine Größe eines mit der Speicheranforderung von dem Beschleuniger zusammenhängenden angeforderten Adressraums;
Erzeugen einer dem Beschleuniger entsprechenden Kette, die die ersten virtuellen Adress-Teilräume (511, 711, 911) mit dem zusätzlichen virtuellen Adressraum verbindet; sowie
Zuweisen einer virtuellen Adresse des zusätzlichen virtuellen Adressraums zum Erfüllen der Speicheranforderung von dem Beschleuniger auf Basis der dem Beschleuniger entsprechenden erzeugten Kette,
wobei der Host-Prozessor des Weiteren konfiguriert ist zum:
Freigeben der virtuellen Adresse des zusätzlichen virtuellen Adressraums in Reaktion auf eine Speicherfreigabeanforderung; sowie
Entfernen des zusätzlichen virtuellen Adressraums aus der dem Beschleuniger entsprechend erzeugten Kette.

## Revendications

1. Procédé de gestion d'une mémoire virtuelle unifiée, UVM, le procédé étant effectué par un dispositif électronique comprenant un accélérateur et un processeur hôte, le procédé comprenant :
en réponse à une demande de mémoire provenant de l'accélérateur, l'allocation (301) à l'accélérateur, parmi des espaces d'adresses virtuelles (100) de la UVM, d'une adresse virtuelle de premiers sous-espaces d'adresses virtuelles (511, 711, 911) réservés à l'accélérateur ; et
en réponse à une demande de mémoire provenant du processeur hôte, l'allocation (302) au processeur hôte, parmi les espaces d'adresses virtuelles (100), d'une adresse virtuelle de seconds sous-espaces d'adresses virtuelles (512, 712, 912) qui sont distincts des premiers sous-espaces d'adresses virtuelles (511, 711, 911).

2. Procédé selon la revendication 1, comprenant en outre :
la division, parmi les espaces d'adresses virtuelles (100) de l'UVM, des premiers sous-espaces d'adresses virtuelles (511, 711, 911) et des seconds sous-espaces d'adresses virtuelles (512, 712, 912), en réservant les premiers sous-espaces d'adresses virtuelles (511, 711, 911) pour l'accélérateur avant toute demande de mémoire provenant de l'accélérateur et avant toute demande de mémoire provenant du processeur hôte.

3. Procédé selon la revendication 1 ou 2, dans lequel
les premiers sous-espaces d'adresses virtuelles (511, 711, 911) ont une taille d'espace d'adresses qui est un multiple entier d'une taille unitaire d'un espace d'adresses ; et
l'allocation de l'adresse virtuelle des premiers sous-espaces d'adresses virtuelles (511, 711, 911) est basée sur la taille de la demande de mémoire provenant de l'accélérateur et basée sur la taille unitaire.

4. Procédé selon la revendication 3, dans lequel l'allocation dynamique de l'adresse virtuelle d'au moins une partie des premiers sous-espaces d'adresses virtuelles comprend :
en réponse à la taille de la demande de mémoire de l'accélérateur qui est supérieure ou égale à la taille unitaire, la segmentation, parmi les premiers sous-espaces d'adresses virtuelles (511, 711, 911), d'un bloc d'espace d'adresses virtuelles dont la taille d'espace d'adresses est un multiple de la taille unitaire capable de couvrir l'espace d'adresses demandé ; et l'allocation d'une adresse virtuelle du bloc d'espace d'adresses virtuelles segmenté pour satisfaire la demande de mémoire de l'accélérateur, ou
dans lequel l'allocation dynamique de l'adresse virtuelle d'au moins une partie des premiers sous-espaces d'adresses virtuelles (511, 711, 911) comprend l'allocation, parmi les premiers sous-espaces d'adresses virtuelles (511, 711, 911), d'une adresse virtuelle d'un bloc d'espace d'adresses virtuelles ayant des espaces d'adresses restants pour satisfaire la demande de mémoire provenant de l'accélérateur en réponse à la taille de la demande de mémoire provenant de l'accélérateur qui est inférieure à la taille unitaire.

5. Procédé selon la revendication 4, dans lequel l'allocation de l'adresse virtuelle du bloc d'espace d'adresses virtuelles ayant les espaces d'adresses restants comprend l'allocation d'une adresse virtuelle des espaces d'adresses restants pour satisfaire la demande de mémoire de l'accélérateur en réponse à la taille des espaces d'adresses restants du bloc d'espace d'adresses virtuelles qui est inférieure à la taille unitaire et qui est supérieure ou égale à la taille de l'espace d'adresses demandé.

6. Procédé selon l'une des revendications 1 à 5, dans lequel
le dispositif électronique comprend de multiples accélérateurs, y compris l'accélérateur ;
les premiers sous-espaces d'adresses virtuelles (511, 711, 911) comprennent des premiers espaces d'adresses virtuelles non chevauchants, dans lequel chacun des premiers espaces d'adresses virtuelles non chevauchants est réservé à un accélérateur correspondant respectivement parmi les accélérateurs, et
l'allocation de l'adresse virtuelle des premiers sous-espaces d'adresses virtuelles (511, 711, 911) réservés à l'accélérateur, à l'accélérateur comprend :
la détermination, parmi les accélérateurs, d'un accélérateur cible associé à la demande de mémoire provenant de l'accélérateur ; et
l'allocation d'une adresse virtuelle des premiers sous-espaces d'adresses virtuelles réservés à l'accélérateur cible déterminé, à l'accélérateur cible déterminé.

7. Procédé selon l'une des revendications 1 à 6, dans lequel l'allocation de l'adresse virtuelle des premiers sous-espaces d'adresses virtuelles (511, 711, 911) réservés à l'accélérateur, à l'accélérateur comprend :
en réponse à la demande de mémoire provenant de l'accélérateur, la réservation supplémentaire d'un espace d'adresses virtuelles supplémentaire pour l'accélérateur en réponse à la taille des espaces d'adresses virtuelles restants des premiers sous-espaces d'adresses virtuelles (511, 711, 911) qui est inférieure à la taille d'un espace d'adresses demandé associé à la demande de mémoire provenant de l'accélérateur ;
la génération d'une chaîne correspondant à l'accélérateur reliant les premiers sous-espaces d'adresses virtuelles (511, 711, 911) à l'espace d'adresses virtuelles supplémentaire ; et
sur la base de la chaîne générée correspondant à l'accélérateur, l'allocation d'une adresse virtuelle de l'espace d'adresses virtuelles supplémentaire pour satisfaire la demande de mémoire provenant de l'accélérateur,
dans lequel le procédé comprend en outre :
la désallocation de l'adresse virtuelle de l'espace d'adresses virtuelles supplémentaire en réponse à une demande de récupération de mémoire ; et
la suppression de l'espace d'adresses virtuelles supplémentaire de la chaîne générée correspondant à l'accélérateur.

8. Procédé selon l'une des revendications 1 à 7, dans lequel le procédé comprend en outre :
la restauration d'une adresse virtuelle allouée à l'accélérateur dans les premiers sous-espaces d'adresses virtuelles (511, 711, 911) réservés à l'accélérateur en réponse à une demande de restauration de point de contrôle ; et
la restauration d'une adresse virtuelle allouée au processeur hôte dans les seconds sous-espaces d'adresses virtuelles (512, 712, 912) en réponse à la demande de restauration de point de contrôle, et
dans lequel le dispositif électronique comprend de multiples accélérateurs, y compris l'accélérateur, et la restauration de l'adresse virtuelle allouée à l'accélérateur comprend la restauration d'une adresse virtuelle spécifiquement allouée à un accélérateur correspondant dans les premiers sous-espaces d'adresses virtuelles réservés à chaque accélérateur.

9. Procédé selon l'une des revendications 1 à 8, dans lequel le dispositif électronique est configuré avec une architecture unifiée de calcul des dispositifs, CUDA, mise en œuvre au moins en partie par le processeur hôte et l'accélérateur.

10. Support de stockage non transitoire lisible par ordinateur stockant des instructions qui, lorsqu'elles sont exécutées par le processeur hôte et/ou l'accélérateur, amènent le processeur hôte et/ou l'accélérateur à réaliser le procédé selon l'une des revendications 1 à 9.

11. Dispositif de gestion d'une mémoire virtuelle, le dispositif comprenant :
un processeur hôte configuré pour, en réponse à une demande de mémoire provenant d'un accélérateur, allouer (301) à l'accélérateur, parmi des espaces d'adresses virtuelles (100), une adresse virtuelle de premiers sous-espaces d'adresses virtuelles (511, 711, 911) réservés à l'accélérateur ; et
un dispositif d'allocation de processeur hôte configuré pour, en réponse à une demande de mémoire provenant d'un processeur hôte, allouer (302) au processeur hôte, parmi les espaces d'adresses virtuelles, une adresse virtuelle de seconds sous-espaces d'adresses virtuelles (512, 712, 912) qui sont distincts des premiers sous-espaces d'adresses virtuelles (511, 711, 911).

12. Dispositif selon la revendication 11, comprenant en outre :
un dispositif de réservation de mémoire virtuelle configuré pour diviser, parmi les espaces d'adresses virtuelles, les premiers sous-espaces d'adresses virtuelles (511, 711, 911) et les seconds sous-espaces d'adresses virtuelles (512, 712, 912) en réservant les premiers espaces d'adresses virtuelles à l'accélérateur avant la demande de mémoire provenant de l'accélérateur et avant la demande de mémoire provenant du processeur hôte.

13. Dispositif selon la revendication 11 ou 12, dans lequel les premiers sous-espaces d'adresses virtuelles (511, 711, 911) ont une taille d'espace d'adresses qui est un multiple de la taille unitaire d'un espace d'adresses, et le processeur hôte est en outre configuré pour allouer dynamiquement une adresse virtuelle d'au moins une partie des premiers sous-espaces d'adresses virtuelles (511, 711, 911) à l'accélérateur, sur la base de la taille de la demande de mémoire provenant de l'accélérateur et de la taille unitaire, ou
dans lequel le dispositif d'allocation d'accélérateur est configuré pour restaurer une adresse virtuelle allouée à l'accélérateur dans les premiers sous-espaces d'adresses virtuelles (511, 711, 911) réservés à l'accélérateur en réponse à une demande de restauration de point de contrôle, et le dispositif d'allocation de processeur hôte est configuré pour restaurer une adresse virtuelle allouée au processeur hôte dans les seconds sous-espaces d'adresses virtuelles (512, 712, 912) en réponse à la demande de restauration de point de contrôle.

14. Dispositif selon l'une des revendications 11 à 13, dans lequel le dispositif comprend de multiples accélérateurs, y compris l'accélérateur,
les premiers sous-espaces d'adresses virtuelles (511, 711, 911) comprennent des premiers espaces d'adresses virtuelles non chevauchants, dans lequel chacun des premiers sous-espaces d'adresses virtuelles non chevauchants (511, 711, 911) est réservé à un accélérateur correspondant respectivement parmi les accélérateurs, et
le processeur hôte est en outre configuré pour :
déterminer, parmi les accélérateurs, un accélérateur cible associé à la demande de mémoire provenant de l'accélérateur ; et
allouer une adresse virtuelle des premiers sous-espaces d'adresses virtuelles réservés à l'accélérateur cible déterminé, à l'accélérateur cible déterminé.

15. Dispositif selon l'une des revendications 11 à 14, dans lequel le processeur hôte est en outre configuré pour :
en réponse à la demande de mémoire provenant de l'accélérateur, réserver également un espace d'adresses virtuelles supplémentaire à l'accélérateur en réponse à une taille des espaces d'adresses virtuelles restants des premiers sous-espaces d'adresses virtuelles (511, 711, 911) qui est inférieure à la taille d'un espace d'adresses demandé associé à la demande de mémoire provenant de l'accélérateur ;
générer une chaîne correspondant à l'accélérateur reliant les premiers sous-espaces d'adresses virtuelles (511, 711, 911) à l'espace d'adresses virtuelles supplémentaire ; et
sur la base de la chaîne générée correspondant à l'accélérateur, allouer une adresse virtuelle de l'espace d'adresses virtuelles supplémentaire pour satisfaire la demande de mémoire provenant de l'accélérateur,
dans lequel le processeur hôte est en outre configuré pour :
désallouer l'adresse virtuelle de l'espace d'adresses virtuelles supplémentaire en réponse à une demande de récupération de mémoire ; et
supprimer l'espace d'adresses virtuelles supplémentaire de la chaîne générée correspondant à l'accélérateur.
